(19) Europäisches Patentamt
European Patent Office
Office européen des brevets

(11) EP 4 369 767 A1

(12) EUROPEAN PATENT APPLICATION
published in accordance with Art. 153(4) EPC

(43) Date of publication:
15.05.2024 Bulletin 2024/20

(51) International Patent Classification (IPC):
H04W 24/06 (2009.01)    H04W 72/04 (2023.01)
G06N 3/04 (2023.01)

(21) Application number: 22836785.0

(52) Cooperative Patent Classification (CPC):
G06N 3/04; G06N 3/045; G06N 3/08; H04W 24/06;
H04W 72/04; H04W 72/21; H04W 72/542

(22) Date of filing: 29.06.2022

(86) International application number:
PCT/CN2022/102285

(87) International publication number:
WO 2023/280032 (12.01.2023 Gazette 2023/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.07.2021 CN 202110756858

(71) Applicant: Sony Group Corporation
Tokyo 108-0075 (JP)

(72) Inventors:
• WU, Junjie
  Beijing 100084 (CN)
• HU, Shaoling
  Beijing 100084 (CN)
• WANG, Xiaoxue
  Beijing 100028 (CN)
• SUN, Chen
  Beijing 100028 (CN)
• CHEN, Wei
  Beijing 100084 (CN)

(74) Representative: D Young & Co LLP
3 Noble Street
London EC2V 7BQ (GB)

(54) **ELECTRONIC DEVICE FOR USE IN WIRELESS COMMUNICATION SYSTEM, METHOD AND STORAGE MEDIUM**

(57) The present disclosure relates to an electronic device, a method, and a storage medium for use in a wireless communication system. Embodiments regarding use of distributed machine learning in wireless communication systems are described. In one embodiment, quantity information of training samples used by a user equipment during a current training of a local model is sent to a control entity; uplink-resource information for uploading parameters of the local model is received, where an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model; and the parameters of the local model are uploaded to the control entity via the uplink resource indicated by the uplink-resource information, to cause the control entity to obtain a next global model.

FIG. 3

**Description**

CROSS-REFERENCE TO RELATED APPLICATIONS

This application claims priority to Chinese Patent Application 202110756858.0 filed on July 5, 2021, which is incorporated herein by reference as if set forth herein in its entirety.

TECHNICAL FIELD

The present disclosure relates to the field of wireless communications, and more specifically, to a technology employed for distributed machine learning and also to a technology for data transmission.

BACKGROUND

With the development of wireless networks and artificial intelligence, networks are gradually becoming more intelligent. Regardless of the 5G technology being currently in full swing or the next-generation wireless network technology in the future, wireless network intelligence is one of the important directions of development. Specifically, federated learning (FL) has become an extremely important framework in the field of distributed artificial intelligence or distributed machine learning, because it has unique advantages in ensuring data privacy, security, and legal compliance, and allows for collaborative modeling across multiple devices, enhancing effectiveness of machine learning models. Its integration with wireless networks will be one of the main focuses of intelligent applications of wireless networks in the future. Therefore, the effective integration design of FL with wireless network technologies will have a significant impact on future artificial intelligence applications.

Due to characteristics of FL applications, FL imposes higher requirements on quality of service (QoS) of the wireless networks. For example, FL data services exhibit time-sensitive characteristics, so that it is necessary to adopt ultra-reliable low-latency communications (URLLC) scenarios to transmit data services generated for FL. Specifically, transmission of parameters of a local model and a global model in FL requires support from URLLC. However, providing URLLC data transmission services to a large number of user equipments simultaneously may impose tremendous pressure on wireless networks and significantly increase communication costs. Therefore, in order to enable the wireless networks to meet service requirements for transmission of model parameters in federated learning, it is necessary to correspondingly supplement the current wireless network standards to enable successful operation of FL in wireless networks. It is desirable to enable FL to operate in wireless networks in a cost-effective and efficient manner, avoiding excessive pressure on wireless networks caused by FL applications and enabling errors of a trained global model to be minimized.

Due to limited resources in the wireless networks, it may be insufficient to allow all user equipments participating in distributed machine learning such as FL to upload local-model parameters. Due to lack of local-model parameters, an aggregated global model may have large errors, making it difficult to achieve expected results in distributed machine learning.

Therefore, it is desirable to provide a manner for reducing errors of the global model when applying distributed machine learning in wireless networks.

In addition, 5G communication is receiving increasing attention and research due to its excellent data transmission performance. URLLC, as one of the core application scenarios of 5G communication, has extremely strict performance requirements for reliability and latency. Specifically, URLLC is required to reach 99.999% reliability and 1ms latency. Furthermore, with the evolution and upgrade of wireless networks, many new applications have emerged, which may have even stricter requirements for latency and reliability. For example, factory automation requires reliability higher than 7 nines (99.99999%) and latency shorter than 1ms. The next-generation wireless communication (B5G or 6G) will have even higher and stricter requirements for latency and reliability, with expected reliability reaching 9 nines and latency below 0.1ms.

There are several issues regarding communications with higher requirements for latency and reliability, such as URLLC. Firstly, numerous technologies such as short packet transmission, unlicensed transmission, short time interval transmission, and time, frequency, and space diversity are currently being developed and used to improve reliability and reduce latency, but if exceptional situations such as rapid changes in channel states occur, existing technologies often require consuming significant resources to cope with these exceptional situations, which lacks adaptability to wireless transmission environments and also lacks flexibility in scheduling. Secondly, existing networks need to consume a large number of resources for channel detection and estimation to implement low-latency and high-reliability communications like URLLC, resulting in high overheads and difficulties in providing more accurate channel information in exceptional situations. Thirdly, due to real-time variations in radio channels, channel sampling information used for scheduling by a base station may become outdated and distorted, losing either partial or complete scheduling value for the system, and thus making it challenging to ensure timely and effective transmission of information.

Therefore, it is desirable to provide a manner that allows a base station to flexibly send downlink data on more appropriate resources based on current channel states, thereby improving transmission performance of downlink data.

SUMMARY

One aspect of the present disclosure relates to an electronic device on a user equipment side in a wireless communication system. According to an embodiment, the electronic device may include a processing circuit system. The processing circuit system may be configured to: send, to a control entity, quantity information of training samples used by a user equipment during a current training of a local model; receive uplink-resource information for uploading parameters of the local model, wherein an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model; and upload the parameters of the local model to the control entity via the uplink resource indicated by the uplink-resource information, to cause the control entity to obtain a next global model.

One aspect of the present disclosure relates to an electronic device on a network device side in a wireless communication system. According to an embodiment, the electronic device includes a processing circuit system. The processing circuit system may be configured to: receive, from a user equipment, quantity information of training samples used by the user equipment during a current training of a local model; send uplink-resource information for uploading parameters of the local model, wherein an uplink resource indicated by the uplink-resource information is allocated by the processing circuit system based on quantity information coming from multiple user equipments, so that a user equipment with a larger quantity indicated by the quantity information has a greater chance of being allocated with an uplink resource sufficient to upload the parameters of the local model; and receive the parameters of the local model that are uploaded by the user equipment via the uplink resource indicated by the uplink-resource information, so as to obtain a next global model.

Another aspect of the present disclosure relates to a method for use in a wireless communication system. In an embodiment, the method may include: sending, to a control entity, quantity information of training samples used by a user equipment during a current training of a local model; receiving uplink-resource information for uploading parameters of the local model, wherein an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model; and uploading the parameters of the local model to the control entity via the uplink resource indicated by the uplink-resource information, to cause the control entity to obtain a next global model.

Another aspect of the present disclosure relates to a method for use in a wireless communication system. In an embodiment, the method may include: receiving, from a user equipment, quantity information of training samples used by the user equipment during a current training of a local model; sending uplink-resource information for uploading parameters of the local model, wherein an uplink resource indicated by the uplink-resource information is allocated based on quantity information coming from multiple user equipments, so that a user equipment with a larger quantity indicated by the quantity information has a greater chance of being allocated with an uplink resource sufficient to upload the parameters of the local model; and receiving the parameters of the local model that are uploaded by the user equipment via the uplink resource indicated by the uplink-resource information, so as to obtain a next global model.

A still another aspect of the present disclosure relates to a computer readable storage medium having one or more instructions stored thereon. In some embodiments, when being executed by one or more processors of an electronic device, the one or more instructions may cause the electronic device to perform the methods according to various embodiments of the present disclosure.

A yet still another aspect of the present disclosure relates to various apparatuses, including means or units for performing operations of the methods according to the embodiments of the present disclosure.

The above summary is provided to summarize some exemplary embodiments in order to provide a basic understanding of the various aspects of the subject matter described herein. Therefore, the above-described features are merely examples and should not be construed as limiting the scope or spirit of the subject matter described herein in any way. Other features, aspects, and advantages of the subject matter described herein will become apparent from the Detailed Description described below in conjunction with the drawings.

BRIEF DESCRIPTION OF DRAWINGS

A better understanding of the present disclosure can be achieved by referring to the detailed description given hereinafter in connection with the accompanying drawings. The same or similar reference numerals are used in the accompanying drawings to denote the same or similar components. The accompanying drawings together with the following detailed description are included in the specification and form a part of the specification, and are used to exemplify the embodiments of the present disclosure and explain the principles and advantages of the present disclosure. where:

FIG. 1 is a schematic diagram of a scenario of using distributed machine learning in a wireless network according to an embodiment of the present disclosure.

FIG. 2 is a schematic diagram of an architecture using distributed machine learning in a wireless network according to an embodiment of the present disclosure.

FIG. 3 is a flowchart of a method used when applying distributed machine learning in a wireless network according to an embodiment of the present disclosure.

FIG. 4 is a process diagram of each iteration of distributed machine learning according to an embodiment of the present disclosure, in which eMBB resources that can be temporarily occupied by a base station as a control entity are also shown.

FIG. 5 is a schematic diagram of an interaction process between a control entity and a user equipment according to an embodiment of the present disclosure.

FIG. 6 is a schematic diagram of 5QI values that can be used for model parameter transmission of distributed machine learning according to an embodiment of the present disclosure.

FIG. 7 is a schematic diagram of a system architecture in which a base station sends data to a user equipment according to an embodiment of the present disclosure.

FIG. 8 is a flowchart of a method for data transmission according to an embodiment of the present disclosure.

FIG. 9 is a schematic diagram of training a machine learning model according to an embodiment of the present disclosure.

FIG. 10 is a schematic diagram of training a machine learning model in a first prediction mode according to an embodiment of the present disclosure.

FIG. 11A is a schematic diagram of an architecture for transmitting predicted channel gains according to an embodiment of the present disclosure.

FIG. 11B is a timing diagram for transmitting predicted channel gains using the architecture in FIG. 11A according to an embodiment of the present disclosure.

FIG. 12A is a flowchart of a communication process of sending data by a base station to a user equipment according to an embodiment of the present disclosure.

FIG. 12B is a flowchart of a communication process of receiving data by a user equipment from a base station according to an embodiment of the present disclosure.

FIG. 13 is a timing diagram corresponding to the communication processes shown in FIGs. 12A and 12B according to an embodiment of the present disclosure.

FIG. 14A is a flowchart of another communication process of sending data by a base station to a user equipment according to an embodiment of the present disclosure.

FIG 14B is a flowchart of another communication process of receiving data by a user equipment from a base station according to an embodiment of the present disclosure.

FIG. 15 is a timing diagram corresponding to the communication processes shown in FIGs. 14A and 14B according to an embodiment of the present disclosure.

FIG. 16 is a curve diagram obtained through simulation using the method shown in FIG. 8 according to an embodiment of the present disclosure.

FIG. 17 is a block diagram of an example structure of a personal computer as an information processing device that can be used in an embodiment of the present disclosure.

FIG. 18 is a block diagram illustrating a first example of a schematic configuration of a gNB to which the technology of the present disclosure can be applied.

FIG. 19 is a block diagram illustrating a second example of a schematic configuration of a gNB to which the technology of the present disclosure can be applied

FIG. 20 is a block diagram illustrating an example of a schematic configuration of a smartphone to which the technology of the present disclosure can be applied.

FIG. 21 is a block diagram illustrating an example of a schematic configuration of a car navigation device to which the technology of the present disclosure can be applied.

Although the embodiments described in the present disclosure may have various modifications and alternatives, specific embodiments thereof are illustrated as examples in the accompany drawings and described in detail in this specification. However, it should be understood that the drawings and detailed description thereof are not intended to limit embodiments to the specific forms disclosed, but to cover all modifications, equivalents, and alternatives falling within the spirit and scope of the claims.

DESCRIPTION OF EMBODIMENTS

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

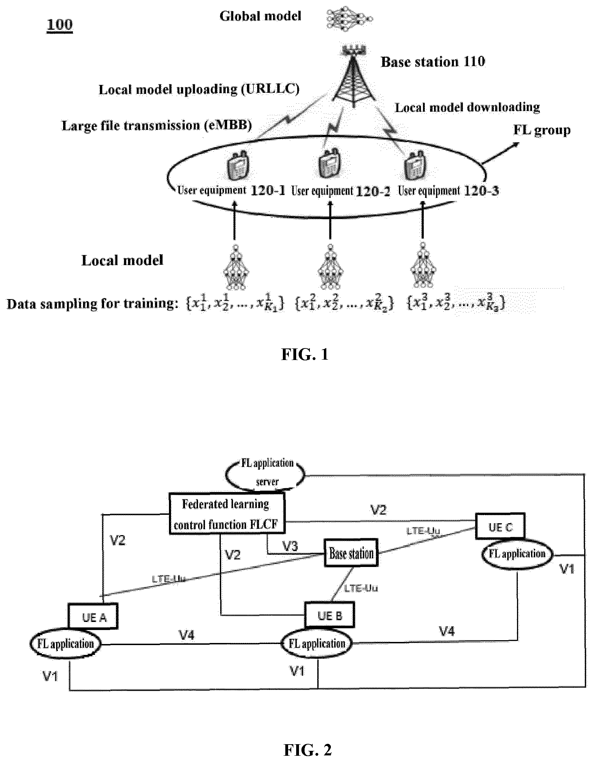

Referring to FIG. 1 first, a schematic diagram of a scenario of using distributed machine learning in a wireless network 100 according to an embodiment of the present disclosure is described.

As shown in FIG. 1, a wireless network 100 includes multiple user equipments (UEs) 120-1 to 120-n and a base station (BS) 110. The wireless network 100 may be an existing network such as LTE (Long Term Evolution), LTE-A, NR (New Radio), or a new wireless network that will appear in the future. The base station 110 is connected to a core network, and may be a 5G base station such as Node B, eNodeB, or HeNB, or other access device that provides wireless access services to the user equipments. Each of the user equipments 120-1 to 120-n may be a terminal device such as a mobile phone, a smartphone, a tablet computer, a laptop computer, a notebook computer, a digital television, or a server. Users can receive a wide range of network services by using user equipments. In the example of FIG. 1, only three user equipments 120-1, 120-2, and 120-3 are shown, but those skilled in the art can understand that the number of user equipments communicating with one base station can be more or fewer. For ease of description, when different user equipments do not need to be differentiated, the user equipment is referred to as the user equipment 120 hereinafter.

Due to the use of distributed machine learning in the wireless network 100, the user equipments 120-1 to 120-3 together form a distributed machine learning group. Each user equipment 120 within the group may have one local model. There may be one global model at the base station 110. The user equipment 120 can collect its local data and train its local model, so as to obtain parameters of the local model. For example, the user equipment 120-1 can collect its local data and obtain data samples

$$\{x_1^1, x_2^1, \ldots, x_{k_1}^1\}$$

for training. Training data of a local model of the user equipment 120-2 are data samples

$$\{x_1^2, x_2^2, \ldots, x_{k_2}^2\}$$

collected by the user equipment 120-2, and training data of a local model of the user equipment 120-3 are data samples

$$\{x_1^3, x_2^3, \dots, x_{K_3}^3\}$$

collected by the user equipment 120-3. These data samples can be obtained by the user equipments based on historical processing information and/or stored information, or can be input into the user equipments by an administrator.

By inputting the data samples into an existing program (such as Pycharm) for training the model in each user equipment, the parameters of the model can be obtained through fitting. Such models may be a variety of machine learning models or artificial intelligence (AI) models, which may be formed by various existing neural networks and so on according to user needs. More generally, any mathematical model that can be characterized by parameters can be used as a local model and a global model. In the distributed machine learning adopted by the embodiments of the present disclosure, the specific composition and implementable functions of the unified local model and global model are not particularly limited.

The user equipment 120 can upload a local model trained in the current iteration to the base station 110. Uploading the local model means uploading parameters of the local model (hereinafter, model uploading and model parameter uploading have the same meaning), for example, uploading parameters of nodes at each layer of the model. The user equipment may use URLLC service resources to upload model parameters to meet the requirements for latency and reliability. The base station 110 may perform aggregation to obtain a global model based on the model parameters uploaded by individual user equipments, and may deliver parameters of the global model to individual user equipments through for example URLLC service resources. In addition, the user equipments may also perform transmission of other data services with the base station. For example, the user equipments may perform large file transmission with the base station through enhanced mobile broadband (eMBB) service resources.

Distributed machine learning used in the wireless network 100 may be federated learning. Those skilled in the art can conceive that in addition to being implemented locally on a device in a centralized manner, various machine learning can also be implemented by multiple nodes in a distributed manner. Therefore, the embodiments disclosed herein can be applied to scenarios where machine learning is performed in a distributed manner in wireless networks. The embodiments of the present disclosure do not particularly limit the specific type of distributed machine learning, as long as the user equipment can upload the parameters of the local model to the base station and the base station can deliver the parameters of the global model to the user equipment. For ease of description, the technical solutions of the present disclosure are described below by using federated learning (FL) as an example of distributed machine learning. Those skilled in the art can understand that the embodiments of the present disclosure are still applicable when other distributed machine learning is applied.

When federated learning is applied in the wireless network 100, interaction between communication entities can be specifically divided into the following four types V1-V4, as shown in FIG. 2. It should be noted that in FIG. 2, a federated learning controller (FLCF) which is a functional entity is included in addition to user equipments UE A, UE B, UE C, and a base station. The FLCF receives parameters of local models from the user equipments, performs aggregation to obtain a global model, and then sends parameters of the global model to the user equipments through the base station. In addition, the FLCF further receives, from the base station, status information from the user equipments and available radio resource information, so as to determine how to allocate uplink resources for model uploading to different user equipments. A control entity in federated learning is determined based on a position of the FLCF. For example, the FLCF may be located inside the base station, or may be located inside a separate server that can communicate with the base station, or may be located inside a core network element that can communicate with the base station. The corresponding control entities are the base station, the server, and the core network element, respectively. In FIG. 1, the FLCF is located inside the base station, and therefore the base station is a control entity of federated learning. If the FLCF is located inside another device, the base station in FIG. 1 may be replaced with the corresponding device.

Further referring to FIG. 2, UE A, UE B, and UE C all include FL applications, and the FLCF includes an FL application server. The UE A, UE B, and UE C are connected to the base station through an air interface LTE-Uu. V1s between the UE A, UE B, and UE C represent interaction of user-side edge information. V2s between the FL applications and FL application server represent request, distribution, upload, and download of models under the federated learning framework. When the FLCF is not located inside the base station, information transmission of the procedures included in V2s needs to be forwarded via the base station. V2s between the UE A, UE B, UE C and the base station represent that the user equipments send, to the base station, user equipment status information, for example, the number of samples used for training the local model by the user equipment or a distance between the user equipment and the base station. V3 between the base station and the FLCF represents that the base station provides the FLCF with information required for uplink resource allocation, including for example the status information received in V2 and radio resources that can be used at the stage of local model uploading (for example, limited given uplink resources dedicated to model uploading and uplink resources that can be temporarily occupied). V3 may also represent that the FLCF provides the base station with QoS requirements for federated learning (for example, 5QI values specific to parameter transmission of federated learning), and sends to the base station an uplink resource allocation instruction for model uploading, so that the base station allocates, according to the uplink resource allocation instruction, corresponding uplink resources to the user equipments for model uploading.

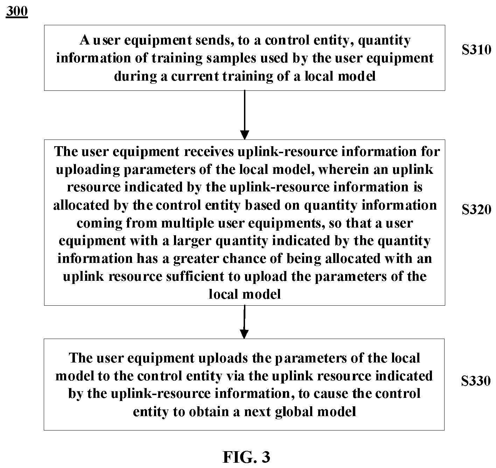

Due to limitation of radio resources, radio resources dedicated to federated learning may be insufficient for uploading all local models, resulting in relatively large errors of the global model. In the embodiments of the present disclosure, it may be considered that the local models of different user equipments may have different degrees of importance to the global model, so it is assumed that if more important local models can be uploaded preferentially, errors of the global model can be reduced. Based on this consideration, the foregoing V2 and V3 are introduced. V2 and V3 are specifically described below with reference to the flowchart of the method 300 shown in FIG. 3. Through execution of the method 300, uplink resources for uploading local-model parameters can be more properly allocated to different user equipments, so as to reduce errors of the global model.

In S310, the user equipment sends, to the control entity, quantity information of training samples used by the user equipment during a current training of the local model.

Under the framework of distributed machine learning such as federated learning, it is necessary to continuously update parameters of the local model through multiple iterations to better match actual situations, etc. of current training samples, thereby achieving higher accuracy. In each iteration, the user equipment trains its local model based on collected training samples. During the training process, the user equipment determines the total number of training samples used for this training, and feeds the number back to the control entity by using a message (such as signaling).

The number of training samples reflects the importance degree of the local model of the user equipment to some extent. A larger number of training samples used for training the local model by the user equipment indicates that the parameters of the model can reflect a larger amount of data information, and thus having higher confidence, so that a prediction result from the model is more accurate, making the model more important.

The control entity may be a network device (such as a base station, a server, or a core network element) at which the FLCF is located in FIG. 2, and is configured to obtain a global model based on local-model parameters from user equipments in a distributed machine learning group (such as a federated learning group), and deliver parameters of the global model to the user equipments. The control entity is further configured to determine, for the user equipments in the group, uplink resource allocation for model uploading.

In S320, the user equipment receives uplink-resource information for uploading the parameters of the local model, where an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model.

Each user equipments in a same federated learning group needs to provide the control entity with quantity information of training samples that are used for training the local model in the current iteration. The control entity can determine a quantity relationship based on the number of training samples used by each user equipment. Because a user equipment using more training samples generally has more accurate (or important) trained local models due to more data information being contained, the control entity can allocate uplink resources sufficient for uploading local-model parameters to the user equipment with more training samples, ensuring that more important local models can be uploaded. This becomes particularly important in scenarios with limited radio resources, where prioritizing the uploading of more important local models plays a crucial role in reducing errors of the global model. A specific manner of uplink resource allocation will be described below.

After the uplink resources are allocated by the control entity, information related to the allocated uplink resources may be notified to the user equipments, so that the user equipments may send model parameters on the allocated uplink resources.

In S330, the user equipment uploads the parameters of the local model to the control entity via the uplink resource indicated by the uplink-resource information, to cause the control entity to obtain a next global model.

The user equipment sends the parameters of the local model to the control entity on the uplink resource allocated to itself. Based on parameters uploaded by different user equipments, the control entity can obtain a global model according to existing technologies (such as the aggregation technology in federated learning). After obtaining the global model, the control entity can send parameters of the global model to the user equipments, so that the user equipments can update the local models and continue to use new training data to train the updated local models in the next iteration.

The uplink resource indicated by the uplink-resource information may be an uplink resource for the URLLC service. This can ensure that uploading of parameters has low latency and high reliability, which helps to reduce errors of the global model. However, radio resources are usually limited in a wireless system, so that uplink resources (such as URLLC resources) dedicated to model uploading may be insufficient for uploading by all user equipments. In such cases, temporary resource occupation can be considered for model uploading. For example, uplink resources for ongoing non-latency-sensitive services performed by all user equipments in the federated learning group during the model uploading phase can be temporarily occupied, such as uplink resources for enhanced mobile broadband (eMBB) services. In this case, uplink resources that can be occupied are released from the original services and allocated to user equipments lacking uplink resources for uploading model parameters. This ensures that more model parameters can be uploaded to the control entity for aggregation, and thus further reducing errors of the global model. By using a given limited number of URLLC uplink resources (which is usually smaller than the number of user equipments) and having an opportunity to use some random occupiable eMBB service uplink resources during the uploading phase, it becomes possible to flexibly schedule uplink resources to meet the needs of model uploading.

S310 to S330 involve different devices, depending on a position of the FLCF in FIG. 2. For example, in a case that the FLCF in FIG. 2 is located inside the base station, the control entity is the base station. In this case, S310 and S330 involve communication between the user equipments and the base station, and the uplink-resource information in S320 is directly determined and sent to the user equipments by the base station. For another example, in a case that the FLCF in FIG. 2 may be located inside a network device except from the base station, such as a server or a core network element, the control entity is the server or the core network element. In this case, the quantity information sent by the user equipments in S310 and the model parameters sent by the user equipments in S330 need to be forwarded to the control entity via the base station. The uplink-resource information received by the user equipments in S320 needs to be first sent from the control entity to the base station and then forwarded to the user equipments by the base station. The uplink-resource information sent to the base station by the control entity and the uplink-resource information forwarded to the user equipments by the base station may have different forms, but they refer to the same uplink resources. Because they refer to the same uplink resources, they can be considered as being essentially the same. Preferably, the FLCF is located inside the base station, and thus the base station is the control entity, causing the transmission of model parameters to have smaller latency and to be more stable and reliable. Furthermore, preferably, the distributed machine learning used in the wireless network is federated learning.

Based on the above technical solutions, the quantity information of training samples that are used for training local models is sent to the control entity (for example, the base station), so that the control entity can determine the degree of importance of the local models at different user equipments based on the quantity information reported by the different user equipments. In this way, more important local models utilizing more training samples have a higher opportunity to be uploaded to the control entity, so that the global model can be aggregated based on more important local models, and thus reducing errors of the global model.

According to an embodiment of the present disclosure, in addition to sending the quantity information to the control entity, the user equipment may send, to the control entity, information about a distance between itself and the base station. Such distance information reflects a physical distance between the user equipment and the base station, such as a line-of-sight distance for signal transmission. A reason for uploading the distance information is to enable the control entity to give priority to user equipments closer to the base station when allocating uplink resources, thereby optimizing energy consumption of the user equipments within the distributed machine learning group.

Operations of the user equipments consume battery power, and the battery capacity is limited. To extend the battery life of the user equipments, during a procedure of federated learning, a total power constraint can be set for all user equipments in the federated learning group, so that the total energy consumed by individual user equipments in transmitting model parameters is not excessively large. The total power constraint can be determined based on an average power constraint. Average power is an average value of data transmit powers of all user equipments participating in federated learning, and can be determined by the base station based on strengths of signals received from the user equipments. The power constraint may be provided to the control entity, so that the control entity considers the power constraint during uplink resource allocation.

When the control entity knows both the quantity of training samples used by the user equipments to train local models and the distances between the user equipments and the base station, the control entity can enable user equipments with larger sample quantities and shorter distances to have a greater chance of being allocated with uplink resources sufficient to upload local-model parameters. The larger the quantity of used training samples is, the more important the corresponding local model is. The shorter the distance from the base station is, the smaller the energy consumption for uploading the local model by the user equipment is, and thus providing an advantage in terms of energy efficiency. In this way, not only more important local models are guaranteed to be uploaded, but also more important local models with lower energy consumption can be further guaranteed to be uploaded.

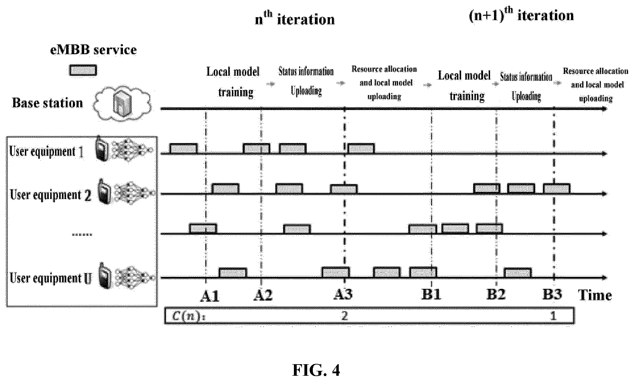

FIG. 4 is a process diagram of each iteration of distributed machine learning according to an embodiment of the present disclosure, in which, in addition to uplink resources dedicated to model uploading, resources that can be temporarily occupied and are eMBB uplink resources in the example of FIG. 4 are shown.

As shown in FIG. 4, the $n^{th}$ iteration and the $(n+1)^{th}$ iteration have a same iterative process, but eMBB resources that can be temporarily occupied in each iteration are different. Each iteration includes three phases: Phase 1 is a training phase of the local model of the user equipment, phase 2 is a uploading phase of status information of the user equipment, and phase 3 is a phase of resource allocation by the control entity, local-model uploading by the user equipment and global-model delivery by the control entity. In the example of FIG. 4, the control entity is a base station, and the distributed machine learning is federated learning.

The federated learning group includes user equipment 1, user equipment 2 to user equipment U, totaling U user equipments. Each user equipment has a local model and performs training in phase 1 (for example, A1 to A2 and B1 to B2) based on training samples collected locally by the user equipment. In phase 2 (for example, A2 to A3 and B2 to B3), each user equipment i sends, to the base station, its status information including the number $K_t(n)$ of samples used during training of the model. The status information may further include a distance $d_i(n)$ between the user equipment i and the base station. When the base station receives the status information of all the user equipments in the group, the iteration process enters phase 3 (for example, A3 to B1 and B3 to a start time of local model training in the next iteration). At a start time of phase 3 (for example, A3 and B3), the base station can determine ongoing eMBB services with all the user equipments in the group, and uplink resources of these ongoing eMBB services can be occupied for uploading local-model parameters in the current iteration.

In FIG. 4, at A3, there are two eMBB services, and uplink resources of the two eMBB services are resources that can be temporarily occupied for transmitting local-model parameters. At B3, there is one eMBB service, and uplink resources of this eMBB service are resources that can be temporarily occupied for transmitting local-model parameters. The temporarily occupied uplink resources of the eMBB services can be allocated to any user equipment in the group that needs to upload the local model, regardless of which user equipment the resources of the eMBB services come from.

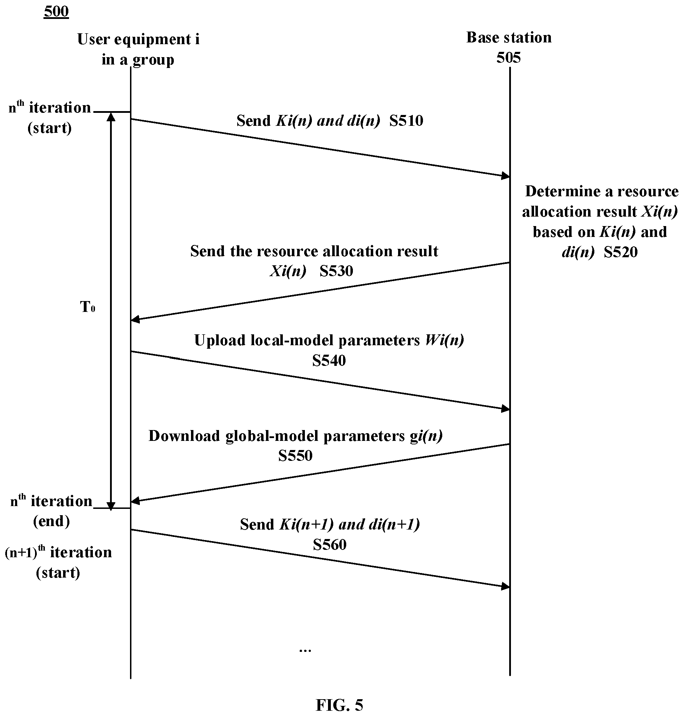

FIG. 5 is a schematic diagram of an interaction process 500 between a control entity and a user equipment according to an embodiment of the present disclosure. In FIG. 5, the control entity being the base station 505 is used as an example for description. Those skilled in the art can understand that similar processes can be performed when the control entity is other network device.

As shown in FIG. 5, a time length from the beginning to the end of the nth iteration of distributed machine learning is $T_0$, and an end moment of the nth iteration is a start moment of the next (n+1)th iteration. When the nth iteration starts, the user equipment i in the distributed machine learning group starts to train a local machine learning model (simply referred to as a local model) through locally collected training samples. In S510, the user equipment i sends, to the base station 505, the number $K_t(n)$ of training samples used for training the local model and the distance $d_t(n)$ between the user equipment i and the base station 505. For example, such information is sent to the base station 505 through a physical uplink shared channel (PUSCH). $K_t(n)$ and $d_t(n)$ may be sent simultaneously or separately.

In S520, based on $K_t(n)$ and $d_t(n)$ received from all the user equipments in the group, the base station 505 determines an uplink resource $X_t(n)$ that needs to be allocated to the user equipment i. A specific resource allocation manner is described in detail in the following. The uplink resource $X_t(n)$ may be a URLLC resource dedicated to model uploading, or may be resources (such as eMBB resources) of ongoing non-latency-sensitive services between the user equipments and the base station 505 when the base station receives $K_t(n)$ and $d_t(n)$ of all the user equipments in the group. When the resources of the non-latency-sensitive services need to be occupied for transmitting model parameters, these resources are released by the base station 505 and corresponding user equipments, and then are all used for transmission of the model parameters.

In S530, the base station 505 transmits a resource allocation result $X_t(n)$ to the user equipment i.

In S540, the user equipment i uploads parameters $\omega_t(n)$ of the local model to the base station 505 on the uplink resource indicated by $X_t(n)$.

In S550, the base station 505 aggregates the local models received from the user equipments in the group to obtain a global machine learning model (simply referred to as the global model), and sends parameters $g_t(n)$ of the global model to the user equipment i, so that the user equipment i uses $g_t(n)$ to update the local model.

Next, the user equipment i starts the (n+1)th iteration to train the updated local model, and in S560, sends, to the base station 505, the number $K_t(n+1)$ of training samples used for training the local model and the distance $d_t(n+1)$ between the user equipment i and the base station 505. When the user equipment i remains still, the distance $d_t(n+1)$ may not be sent. Then, similar to S520 to S550, the base station 505 continues to allocate uplink resources based on new status information, and notifies the user equipment i of a resource allocation result. The user equipment i uploads local-model parameters, and the base station 505 sends global-model parameters, thereby completing a new-round iteration. The iteration process can be performed continuously, so that the machine learning model on each user equipment can match more training samples and become more accurate.

The following uses federated learning as an example to describe a process in which the control entity allocates uplink resources based on the status information including quantity information and distance information sent by the user equipments. In addition to URLLC service resources dedicated to model uploading, the uplink resources used for federated learning include eMBB resources that can be temporarily occupied.

When the control entity receives, from each of the user equipments in the federated learning group, quantity information about the number of training samples used for training a local model in the current iteration and the distance information between the user equipment and the base station, the control entity can dynamically allocate uplink resources in real time, for uploading of local models. Specifically, in one aspect, the control entity may consider the quantity information of samples for training a local model by the user equipment, so as to determine the importance degree of the local model trained by the user equipment. In another aspect, the control entity may consider distance information between the user equipment and the base station, so as to satisfy an average power limit. In yet another aspect, the control entity may determine constraints of resources considering that the number of radio resources dedicated to federated learning is smaller than the number of user equipments in the group. Based on the importance degree of the models, power constraints and/or radio resource constraints, the control entity may determine radio resource allocation among user equipments to achieve a desire to minimize errors of the global model.

In order to achieve optimization of energy consumption costs, radio resource costs, and machine learning effects at the same time as much as possible, the Inventors designed the factors to be considered for uplink resource allocation as follows:

$$E\left(F\big(g(n)\big) - F(g^*)\right) + \eta\|L(n)\|_0 + \mu\sum_{i=1}^{U} d_i^2 \mathbb{I}\{(A_i(n) + L_i(n)) > 0\} \ \dots (1)$$

Variables in Expression (1) are defined as follows:

$g(n)$: indicates a global model obtained through federated learning after the $n^{th}$ iteration.

$g^*$: indicates an optimal global model.

$F(g)$: indicates an error function of the model $g$, whose specific form depends on specific representation of the model.

$U$: indicates the total number of user equipments participating in federated learning, that is, the total number of user equipments in a federated learning group.

$L(n)$: indicates uplink resource allocation for URLLC services dedicated to federated learning,

$$L(n) = \{L_1(n), L_2(n), \dots, L_U(n)\},$$

where

$$L_i(n) = 0$$

or 1.

$$L_i(n) = 0$$

indicates that the user equipment i is not allocated with a URLLC service resource dedicated to federated learning, and $L_i(n) = 1$ indicates that the user equipment i is allocated with a URLLC service resource dedicated to federated learning.

$A_i(n)$: indicates uplink resource allocation for eMBB services occupied by the user equipment i, where

$$A_i(n) = 0$$

or 1.

$$A_i(n) = 0$$

indicates that the user equipment i is not allocated with an eMBB service resource temporarily used for federated learning, and $A_i(n) = 1$ indicates that the user equipment i is allocated with an eMBB service resource temporarily used for federated learning.

$d_i(n)$: indicates a distance between the user equipment i and the base station.

$\eta$ and $\mu$: indicates scaling factors, such as a Lagrangian multiplier.

$E(.)$: indicates mathematical expectation.

$\|.\|_0$: indicates 0 norm, where a calculation result is the number of components greater than 0 in the vector.

$\mathbb{I}\{.\}$ : indicates an indicative function, where when an event inside the brackets is true, the function value is 1; otherwise, the function value is 0.

In Expression (1), factors needed to be considered for uplink resource allocation are divided into three parts. The first part

$$E\left(F(g(n)) - F(g^*)\right)$$

represents an expected error of the global model obtained through aggregation after the nth iteration, which corresponds to machine learning effects or artificial intelligence (AI) training effects. The second part $\|L(n)\|_0$ represents URLLC service resources dedicated to federated learning that are used when uploading local models in the nth iteration, which corresponds to radio resource costs. The third part

$$\sum_{i=1}^{U} d_i^2 \mathbb{I}\{(A_i(n) + L_i(n)) > 0\}$$

represents path loss of radio signals when uploading local models in the nth iteration, which corresponds to energy consumption costs. In order to minimize errors of the global model under constraints of radio resource costs and energy consumption costs, the optimization objective is established as follows:

$$\min_{A, L} E\left(F(g(n)) - F(g^*)\right) \qquad (2)$$

$$s.t.$$

$$\|L(n)\|_0 \leq L_{th} \qquad (3)$$

$$\sum_{i=1}^{U} d_i^2 \mathbb{I}\{(A_i(n) + L_i(n)) > 0\} \leq P_{th} \qquad (4)$$

$$g(n) = \frac{\sum_{i=1}^{U} K_i(n)\omega_i \mathbb{I}\{(A_i(n)+L_i(n))>0\}}{\sum_{i=1}^{U} K_i(n)\mathbb{I}\{(A_i(n)+L_i(n))>0\}} \qquad (5)$$

$$\|A(n)\|_0 \leq C(n) \qquad (6)$$

The meanings of the above expressions are to find $A(n)$ and $L(n)$ to minimize the Expression (2) under the condition of being limited by the Expressions (3) to (6). $A(n)$ is uplink resource allocation for eMBB services occupied by the user equipments in the federated learning group, and $A(n) = \{A_1(n), A_2(n), ..., A_U(n)\}$, where $A_t(n)$ has the same meaning as that in Expression (1). In addition, symbols in Expressions (2) to (6) that are the same as those in Expression (1) have the same meanings, which will not be repeated herein, and only meanings of symbols that are different from those in Expression (1) will be described.

$L_{th}$: indicates a maximum value of URLLC uplink resources dedicated to federated learning, which represents a constraint of radio resource costs. This value can be determined by the base station. For example, this value may be a predetermined percentage of the total available URLLC uplink resources of the base station, such as 5%, 10%, or 20%. This value may alternatively be set in the base station by a user, or may be configured according to a predetermined rule. This value is sent by the base station to the control entity when the control entity is not a base station.

$P_{th}$: indicates a maximum total energy consumption of user equipments used for federated learning, which represents a constraint of energy consumption costs. This value may be determined by the base station based on an average value of the data transmit powers of the user equipments in the federated learning group. For example, this value may be equal to the average value multiplied by the total number of user equipments in the group, or may be equal to a threshold related to energy consumption preset by the user in the base station. This value is sent by the base station to the control entity when the control entity is not a base station.

$\omega_t(n)$: indicates a parameter of the local model obtained through training by the user equipment i in the $n^{th}$ iteration.

$K_t(n)$ indicates the number of training samples used by the user equipment i to train the local model in the $n^{th}$ iteration.

$C(n)$: indicates the total amount of eMBB service resources that can be occupied for uploading the local model in the $n^{th}$ iteration. This value is determined by the base station based on the eMBB services which are being conducted between the base station and the user equipments in the group when the base station receives $K_t(n)$ and $d_t(n)$ from the user equipments in the group. For example, this value may be equal to the total amount of uplink resources for the ongoing eMBB services, or may be equal to a predetermined percentage of this total amount, such as 50% or 70%.

Because the above optimization problem is a multi-objective optimization problem, the solution is relatively complicated, and thus it is desired to transform the above multi-objective optimization problem into a single-objective optimization problem. The multi-objective optimization problem can be transformed into the single-objective optimization problem by minimizing a linear weight of the multiple objectives. As shown in Expressions (7) to (9), the above optimization problem is transformed as follows:

$$\min_{A, L} E\left(F\big(g(n)\big) - F(g^*)\right) + \eta\|L(n)\|_0 + \mu\sum_{t=1}^{U} d_t^2 \mathbb{I}\{(A_t(n) + L_t(n)) > 0\} \ \dots (7)$$

$$s.t.$$

$$g(n) = \frac{\sum_{t=1}^{U} K_t(n)\omega_t \mathbb{I}\{(A_t(n)+L_t(n))>0\}}{\sum_{t=1}^{U} K_t(n)\mathbb{I}\{(A_t(n)+L_t(n))>0\}} \qquad (8)$$

$$\|A(n)\|_0 \leq C(n) \qquad (9)$$

The meanings of the above expressions are to find $A(n)$ and $L(n)$ to minimize the Expression (7) under the condition of being limited by the Expressions (8) to (9). Symbols in Expressions (7) to (9) which are the same as those in Expressions (2) to (6) have the same meanings, which will not be repeated herein.

The difficulty of the above optimization problem lies in the expression of the first part

$$E\left(F(g(n+1)) - F(g^*)\right)$$

of the objective function. Because the result of this expectation function is usually not explicit and its exact result depends on the specific AI model, it is difficult to determine it through an exact expression. Fortunately, an upper bound of this expectation function is given in the non-patent document entitled "A Joint Learning and Communications Framework for Federated Learning Over Wireless networks" published in January 2021 by M. Chen, Z. Yang, W. Saad, C. Yin, H. V Poor, and S. Cuio on pages 269-283 of IEEE Transactions on Wireless Communications, Vol. 20, No. 1, which is incorporated herein by reference. The upper bound of this expectation function is as follows:

$$\mathbb{E}[F(g_{t+1}) - F(g^*)] \le \frac{2\zeta_1}{LK} \sum_{i=1}^{U} K_i \left(1 - a_i + a_i q_i(r_i, P_i)\right) \frac{1 - A^t}{1 - A} + A^t \mathbb{E}(F(g_0) - F(g^*))$$

## Impact of radio factors on federated learning convergence

$$E\left(F(g(n+1)) - F(g^*)\right)$$

in Expression (7) can be replaced by the first item

$$\frac{2\zeta_1}{LK} \sum_{i=1}^{U} K_i \left(1 - a_i + a_i q_i(r_i, P_i)\right) \frac{1 - A^t}{1 - A}$$

in the inequality. The second item

$$A^t \mathbb{E}(F(g_0) - F(g^*))$$

in the above inequality is a constant, which has no impact on the solution of the optimization problem and does not need to be substituted into the Expression (7).

The meanings of the symbols in the first item

$$\frac{2\zeta_1}{LK} \sum_{i=1}^{U} K_i \left(1 - a_i + a_i q_i(r_i, P_i)\right) \frac{1 - A^t}{1 - A}$$

are as follows:

the parameters $\zeta_1$, L, and A are related to a specific machine learning model, and are constants in the optimization problem. The parameter K is the sum of the number of samples used by all user equipments to train local models in the current iteration, that is,

$$K = \sum_{i=1}^{U} K_i,$$

where the parameter $K_i$ represents the number of samples used by the user equipment i to train the local model in the current iteration. The parameter $a_i$ indicates whether the local model of the user equipment i is uploaded. In this optimization problem,

$$a_i = \mathbb{I}\{(A_i(n) + L_i(n)) > 0\}.$$

If the local model of the user equipment i has not been uploaded,

$$a_i = 0;$$

; otherwise

$$a_i = 1.$$

The function $q_i(r_i, P_i)$ represents a bit error rate for uploading the local model through the wireless network by the user equipment i. Because the uplink resources dedicated to federated learning in the current example is URLLC service resources, its bit error rate can be set as a constant $10^{-5}$.

After $E(F(g(n + 1)) - F(g)^*))$ in Expression (7) is replaced by the first item above, start to solve the optimization problem in Expression (7). By setting the values of $\eta$ and $\mu$, $A(n)$ and $L(n)$ can be obtained for minimizing Expression (7). If $A(n)$ does not satisfy the constraint of Expression (6) and/or $L(n)$ does not satisfy the constraint of Expression (3), the values of $\eta$ and $\mu$ are adjusted to re-find $A(n)$ and $L(n)$, for minimizing Expression (7). If the obtained $A(n)$, and $L(n)$ satisfy the constraints of Expressions (6) and (3), the obtained $A(n)$ and $L(n)$ correspond to the uplink resources that need to be allocated to each user equipment. For example, if $A(n) = \{1..\ 1, 0, 0, 0\}$ and $L(n) = \{0, 0, 0, 1, 1\}$, user equipments 1 and 2 are allocated with URLLC uplink resources dedicated to federated learning, user equipment 3 is allocated with no uplink resources, and user equipments 4 and 5 are allocated with currently available eMBB uplink resources. If the obtained $A(n)$ and $L(n)$ still fail to satisfy the constraints of Expressions (6) and (3), continue to adjust the values of $\eta$ and $\mu$ until $A(n)$, and $L(n)$ satisfying the constraints of Expression (6) and (3) are found. In each iteration, $\eta$ and $\mu$ need to be re-determined, so as to resolve Expression (7).

$\eta$ and $\mu$ are adjusted to implement an optimal tradeoff relationship among energy consumption, radio resources, and AI model errors in the federated learning process, so that energy consumption costs and radio resource costs can be dynamically adjusted to obtain different levels of training effects. Through the solution of the above Expression (7), in a case of limited radio resources and energy consumption, appropriate uplink resources for uploading models can be allocated to the user equipments, so that more important local models are given priority to be allocated with uplink resources, and user equipments with closer distances from the base station may also be given priority to be allocated with uplink resources.

After the uplink resources are allocated to the user equipment, in a case that the control entity is not a base station, the control device may send information to the user equipment through the base station to allocate corresponding uplink resources. In a case that the control entity is a base station, the base station allocates corresponding uplink resources to the user equipment based on allocation information obtained by solving Expression (7). The user equipment sends the parameters of the local model on the allocated uplink resources.

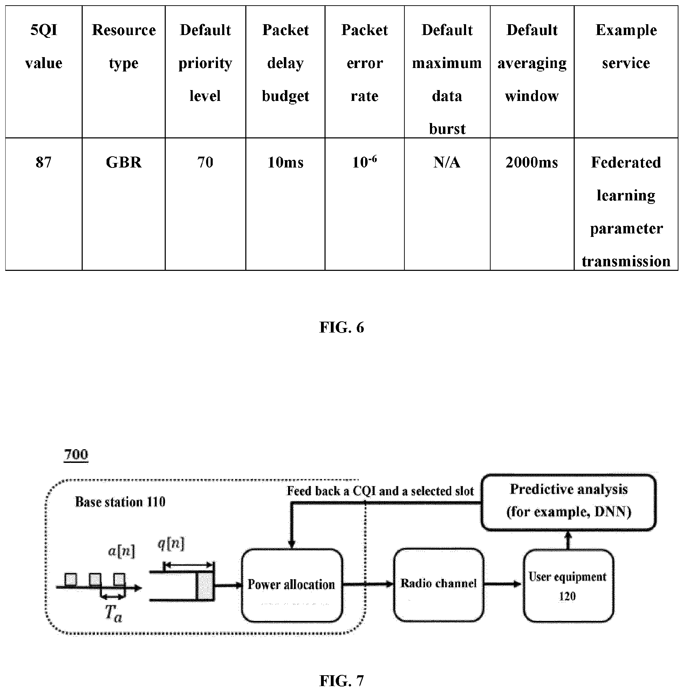

Transmission of local model parameters can meet specific quality of service (QoS) requirements. The QoS requirements may be specified by a prescribed 5QI value. For example, the 5QI value may have a form shown in FIG. 6.

As shown in FIG. 6, the 5QI value may use a value that is not used at present, such as 87. The QoS characteristics related to the 5QI value may include at least one of resource type, default priority level, packet delay budget (PDB), packet error rate (PER), default averaging window, and default maximum data burst. In a scenario of model parameter transmission for distributed machine learning (such as federated learning), the resource type may be guaranteed bit rate (GBR), the default priority level may be 70, the packet delay budget may be 10ms, the packet error rate may be $10^{-6}$, the default averaging window may be 2000ms, and the default maximum data burst may not be defined. Defining such QoS requirements can make transmission of model parameters have satisfactory latency and reliability, and thus making distributed machine learning more accurate.

The 5QI value may be configured in the user equipment, for example, being set in the user equipment by the user, the core-network network device, or the base station, so that the user equipment adopts the corresponding QoS requirements during model uploading.

In addition that local-model uploading needs to meet the QoS requirements specified by the 5QI value, the delivery of the global model also needs to meet the QoS requirements specified by the 5QI value. For example, the core-network network device, management personnel, and programs running in the base station can configure the 5QI value into the base station, so that the base station can meet the corresponding QoS requirements when delivering the parameters of the global model.

The foregoing describes techniques employed when distributed machine learning is used in a wireless communication network. Next, techniques used for transmitting data in a wireless communication network are described below.

First, referring to FIG. 7, FIG. 7 is a schematic diagram of a system architecture 700 in which a base station sends data to a user equipment according to an embodiment of the present disclosure.

As shown in FIG. 7, the base station as a sender sends downlink data to the user equipment as a receiver through a radio channel. The base station and the user equipment in FIG .7 may be the same as the base station and the user equipment in FIG. 1; and for ease of description, they are denoted by the same reference numerals herein.

In order to meet latency requirements of a certain network service, data packets a[n] of this network service can arrive at a sending queue q[n] of the base station 110 at intervals with maximum time Ta, where Ta is a maximum tolerable delay of each data packet. The base station 110 may sample a channel state at intervals with time Th. The sampling interval Th of the channel is much smaller than the tolerable delay Ta of each data packet. When the base station 110 sends data packets in the queue q[n], the base station 110 sends the data packets to the user equipment 120 through the radio channel at a power suitable for channel quality represented by a channel quality indicator (CQI) fed back by the user equipment 120.

In addition to receiving the data packets from the base station 110, the user equipment 120 may perform predictive analysis on a future channel state based on a historical channel state, so as to obtain information which can indicate a slot with the best channel state among multiple future slots. Such information is fed back to the base station 110, so that the base station 110 can determine a slot at which a data packet to be transmitted shall be sent. In addition, the user equipment 120 may further feed back to the base station 110 the CQI measured at the predicted slot with the best channel state, where the CQI may be used for deciding power allocation of the base station 110. In this way, the base station 110 can transmit data in a slot with a good channel state at a power that matches the real CQI of the slot, thereby avoiding use of a slot with a bad channel state and implementing suitable power allocation, so that transmission of downlink data is more appropriate and utilization of resources is more efficient. In addition, correct transmission of downlink data can also avoid subsequent resource overheads and waste caused by error correction.

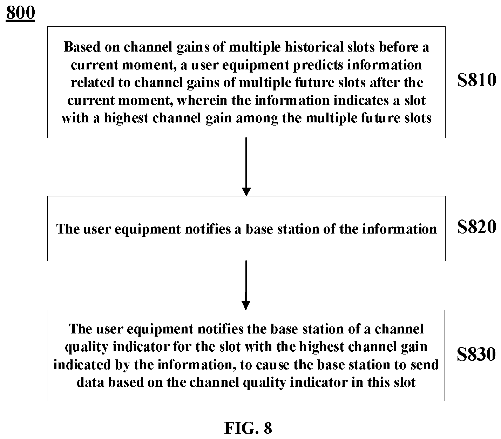

The predictive analysis performed by the user equipment 120 plays an important role in scheduling decision of the network, and the predictive analysis may be implemented based on a deep neural network (DNN) or the like. Combining the predictive analysis with feedback on the CQI of the optimal slot by the user equipment 120 helps improve performance of downlink data transmission. The following specifically describes a flowchart of a method 800 for data transmission executed by the user equipment 120 with reference to FIG. 8.

In S810, the user equipment predicts information related to channel gains of multiple future slots after the current moment, based on channel gains of multiple historical slots before the current moment, where the information indicates a slot with the highest channel gain among the multiple future slots.

The user equipment trains a machine learning model by using a large amount of channel state information collected by the user equipment as training data, to obtain a prediction model for predictive analysis. The prediction model may have a function of predicting channel states of several future slots based on channel states of several past slots. The function can be realized by adopting an existing manner of training a machine learning model, for example, using a development software package specially used for writing and training neural networks, such as the Pycharm development platform. Based on the Pycharm development platform, the tensorflow modules may be used to build a model for training, so as to obtain a model capable of implementing the corresponding function.

After a large number of known training samples are collected, it is necessary to label the training samples to obtain a large number of input data and output data pairs for training the model. The channel states of the N past slots before a certain time t can be labeled with their respective channel gains, so as to be collectively used as input data $x[t]=[h[t-N-1], ..., h[t-1], h[t]]$ of the DNN, where h[x] is a channel gain of a slot corresponding to the time x. In addition, channel states of M future slots after the time t are labeled in at least one of the following four manners, so as to be collectively used as output data y[t] of the DNN, where y[t] has M elements, the first element of which corresponds to the first slot after the time t, the second element corresponds to the second slot after the time t, and so on. N and M are the same or different positive integers greater than 1. For example, N may be equal to 8, 10, 16, or the like, and M may be equal to 3, 5, 8, or the like. Then, a large amount of labeled DNN input data and DNN output data that have correspondence relationship are input into an existing DNN training program together, to obtain parameters of the DNN through fitting, thereby obtaining the prediction model capable of predicting channel states of future slots.

During the training process, different prediction modes can be obtained by labeling the DNN output data in different ways. Four different labeling manners are given below to obtain four different prediction modes. The four different prediction modes do not need to be used at the same time, which means that one communication system can use one or more of these prediction modes or all of these prediction modes. The prediction modes used by different communication systems may be the same or different. When one communication system can use multiple prediction modes, the communication system may choose a prediction mode to be used for each prediction, or the management personnel may configure a prediction mode to be used. When a prediction mode is used for prediction, a prediction result corresponding to this mode can be obtained. The four prediction modes include a first prediction mode, a second prediction mode, a third prediction mode, and a fourth prediction mode. During training of the DNN, each of the four prediction modes has the DNN input data x[t] as described above, and their output data are described below, respectively.

In the first prediction mode, during training of the DNN, the slot with the highest channel gain among the channel states of the future slots is labeled as 1, and the other slots are labeled as 0. They are collectively used as the output data of the DNN. If channel gains of multiple slots are the same and the highest, the earliest slot among the multiple slots is labeled as 1, and the other slots among the multiple slots and slots without the highest channel gain are labeled as 0. They are collectively used as the output data of the DNN. The DNN trained in this way receives channel gains of N past slots, and outputs the slot with the highest channel gain among the M future slots. For example, if the user equipment 120 obtains the output data y[t]=[0,1,0] based on channel gains of multiple historical slots before the current moment t by using such a DNN, the user equipment 120 can determine that in the future three slots, the channel state of the second slot is the best.

In the second prediction mode, during training of the DNN, a slot whose channel gain exceeds a preset threshold among the channel states of the future slots is labeled as 1, and the other slots are labeled as 0, which are collectively used as the output data of the DNN. The DNN trained in this way receives channel gains of N past slots, and outputs all slots whose channel gains exceed the threshold among the M future slots. For example, if the user equipment 120 obtains output data y[t]=[0,1,1] based on channel gains of multiple historical slots before the current moment t by using such a DNN,, the user equipment 120 can determine that the second and third future slots have channel gains exceeding the set threshold and have acceptable channel quality, while a prediction result of the channel gain in the first future slot is relatively poor and the first future slot cannot be used for data transmission. The base station receiving such y[t] information may consider that the second and third slots are slots with the highest channel gain, and may choose to send data in these slots.

In the third prediction mode, during training of the DNN, a slot with the highest channel gain among the channel states of the future slots is labeled as 1, and each of the other slots are labeled as a ratio of a channel gain of this slot to the highest channel gain, which are collectively used as the output data of the DNN. The DNN trained in this way receives channel gains of N past slots, and outputs a relative amplitude of the channel gain of each slot in the M future slots. For example, if the user equipment 120 obtains output data y[t]=[0.5,1,0.8] based on channel gains of multiple historical slots before the current moment t by using such a DNN, the user equipment 120 can determine that in the future three slots, a channel gain of the second slot is the highest, a channel gain of the first slot is 0.5 of the channel gain of the second slot, and a channel gain of the third slot is 0.8 of the channel gain of the second slot. The base station receiving such y[t] information can determine that the channel state of the second future slot is the best, and can choose to send data in this slot.

In the fourth prediction mode, during training of the DNN, each slot in the future slots is labeled with a value of a channel gain of this slot, which is collectively used as the output data of the DNN. The DNN trained in this way receives channel gains of N past slots, and outputs the channel gain of each slot in the M future slots. For example, if the user equipment 120 obtains output data y[t]=[0.1,0.4,0.5] based on channel gains of multiple historical slots before the current moment t by using such a DNN, the user equipment 120 can determine that h[t+1]=0.1, h[t+2]=0.4, and h[t+3]=0.5.

Although the training and use of the prediction model are described above using the DNN as an example of the machine learning model, those skilled in the art can conceive that other machine learning models such as a recurrent neural network or a convolutional neural network can also be used for training the prediction model, and the DNN does not constitute any limitation on the present disclosure.

The user equipment may use only one of the above prediction modes to implement channel state prediction, or may use two or more of the above prediction modes to implement channel state prediction. When the user equipment can use multiple prediction modes, these prediction modes may be used at the same time, or a specific prediction mode may be used within a certain period of time according to selection or setting of the user or the system. Regardless of what prediction mode the user equipment uses, the prediction result needs to be fed back to the base station, so that the base station can perform resource scheduling and data transmission.

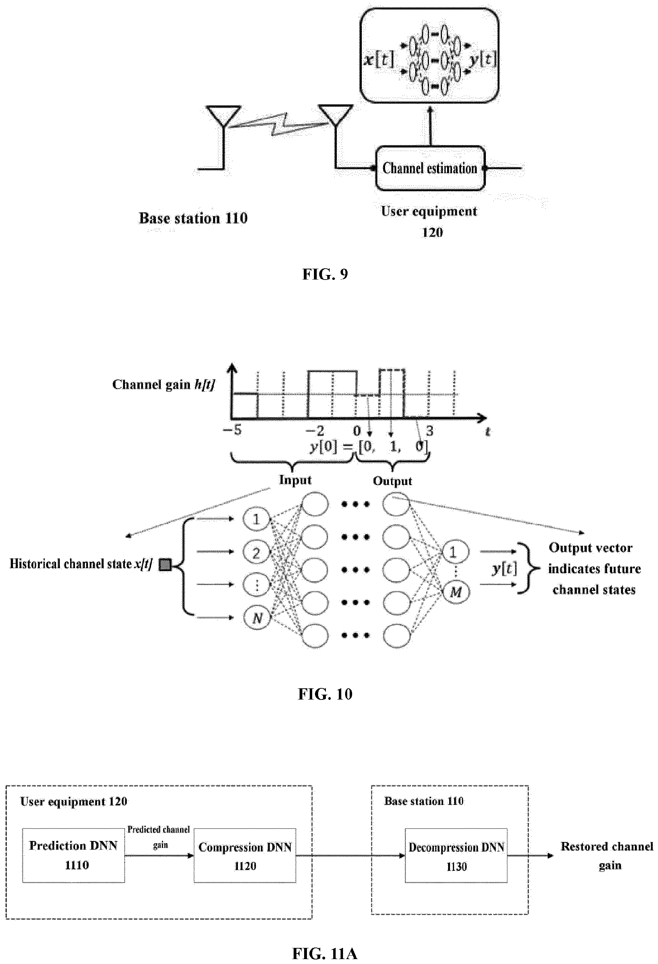

FIG. 9 shows a schematic diagram of training a machine learning model. During communication with the base station 110, the user equipment 120 collects channel state information through channel estimation, as sample data for training. For each of the above four prediction modes, a large number of x[t] and y[t] pairs are obtained by labeling the sample data, and these x[t] and y[t] pairs are input into the machine learning model built by using the existing development platform for training, so as to obtain a prediction model capable of predicting channel states. Depending on forms of x[t] and y[t] pairs used for model training, corresponding y[t] can be obtained based on x[t] in a process of using the model.

More specifically, FIG. 10 shows a schematic diagram of training a machine learning model in the first prediction mode. The current moment is denoted as 0, channel gains of time - 5 to time 0 collectively constitute x[t], and future times 1 to 3 are labeled as y[t]=[0,1,0]. Each element in x[t] is input into each node at the input end of the model, and each element in y[t] is fed to each node at the output end of the model. A large number of x[t] and y[t] pairs are input into the model for calculation, so as to train a model that is capable of predicting a future slot with the highest channel gain based on the channel gains of the historical slots. Those skilled in the art can understand that for each of other prediction modes, input data and output data can be labeled based on the function implemented by the prediction mode, so as to obtain the prediction model for implementing this function by performing training.

After the prediction model is trained, the user equipment 120 may input channel gains of multiple historical slots before the current moment into the prediction model in real time, so as to obtain a corresponding prediction result. Regardless of which prediction mode is used by the user equipment 120, the prediction result is related to the channel gains of the future slots, and the slot with the highest channel gain among the future slots can be determined based on the prediction result.

In addition, the prediction operation performed by the user equipment using the prediction model may be started in response to a trigger command for starting prediction sent by the base station. For example, when data to be sent to the user equipment 120 arrives at the base station 110 or is generated by the base station 110, the base station 110 may send a trigger command to the user equipment 120. In response to receiving the trigger command, user equipment 120 may start performing the prediction operation. In addition, the prediction operation by the user equipment 120 can also be set according to needs. For example, in a case of insufficient radio resources, unstable radio channels, or extreme weather, the user equipment 120 can always be in a state capable of performing channel prediction.

In S820, the user equipment notifies the base station of predicted information.

After the user equipment 120 obtains a prediction result by using the prediction model, the user equipment 120 may immediately feed back the prediction result to the base station 110. For example, the user equipment 120 may send an output result y[t] of the model to the base station 110. Specifically, if the user equipment 120 performs prediction using the first prediction mode, the user equipment 120 notifies the base station of the slot with the highest channel gain among the multiple future slots. If the user equipment 120 performs prediction using the second prediction mode, the user equipment 120 notifies the base station of all the slots with a channel gain exceeding a first threshold among the multiple future slots. If the user equipment 120 performs prediction using the third prediction mode, the user equipment 120 notifies the base station of a relative channel gain of each slot in the multiple future slots. If the user equipment 120 performs prediction using the fourth prediction mode, the user equipment 120 notifies the base station of a channel gain of each slot in the multiple future slots. The prediction result may be carried and sent in a message (for example, feedback signaling) in response to the above trigger command.

Generally, only one of the above four prediction modes is used for each prediction, so the user equipment 120 may feed back only one prediction result to the base station 110. When multiple prediction modes are used simultaneously, all prediction results of these prediction modes can be fed back to the base station. For example, in consideration of computational complexity, it is preferable to use the first prediction mode. In consideration of providing more channel state information to the base station so that the base station can better understand a channel state of each slot, it is preferable to use the fourth prediction mode.

When the user equipment 120 needs to feed back the channel gain of each future slot based on the fourth prediction mode to the base station 110, the user equipment 120 may send to the base station 110 the predicted channel gain of each future slot through a compression model built by a deep neural network.

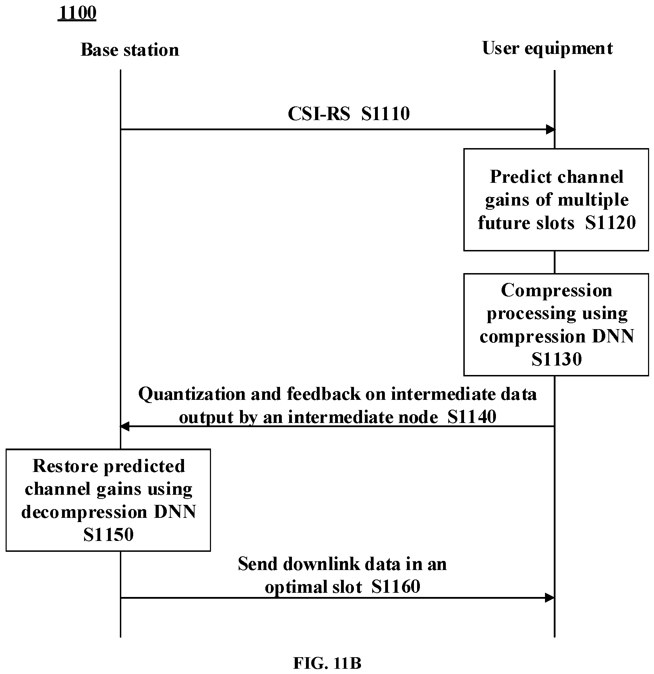

FIG. 11A shows a schematic diagram of an architecture for transmitting predicted channel gains to the base station when the prediction model predicts the channel gain of each slot in the multiple future slots. FIG. 11B is a timing chart corresponding to FIG. 11A.

A prediction DNN 1110 and a compression DNN 1120 may be located in the user equipment 120, and a decompression DNN 1130 may be located in the base station 110. The prediction DNN 1110 is used to predict channel gains of several future slots after the current moment, based on channel gains of several past slots before the current moment. The predicted channel gains are processed by the compression DNN 1120 to obtain intermediate data. The intermediate data is sent to the decompression DNN 1130 via a radio channel. The decompression DNN 1130 processes the received intermediate data to obtain decompressed data. The decompressed data are restored predicted channel gains, which are the same as those obtained by the prediction DNN 1110. The compression DNN 1120 and the decompression DNN 1130 collectively realize the compression and decompression processing of the predicted channel gains, so that the amount of data transmitted through the radio channel is greatly reduced compared with the amount of the predicted channel gains, thereby reducing resources consumed for transmitting the prediction result and improving the system efficiency.

The compression DNN 1120 and decompression DNN 1130 can be trained together as one machine learning model. One input layer, a predetermined number of hidden layers, and one output layer can be built for the model, with the number of nodes at each hidden layer being significantly smaller than the number of nodes at the input layer and the number of nodes at the output layer. Also, the same input data and output data are set for this model. When a machine learning development platform (such as Pycharm) makes the built model convergent by using the input and output data set in this way, the model cab be divided into two parts starting from any of the hidden layers (hereinafter, this layer is referred to as an intermediate layer), one part constituting the compression DNN 1120 and being disposed in the user equipment, and the other part constituting the decompression DNN 1130 and being disposed in the base station. In this way, the compression and decompression processing can be implemented in a manner of building the machine learning model, so that transmission of the channel gains in a compressive way can be implemented in a new compression manner, thereby improving the compression efficiency and reducing consumption of radio resources.

Although the compression module in the user equipment and the decompression module in the base station are described by using DNN as an example in FIG. 11A, those skilled in the art can understand that other machine learning modules can alternatively be used to construct the compression module and decompression module, as long as the amount of data transmitted over the radio channel is significantly less than the amount of the predicted channel gains.

FIG. 11B shows a signal timing diagram 1100 when the user equipment transmits the channel gains to the base station in a case that the prediction model (for example, the prediction DNN 1110) predicts the channel gains.

In S1110, the base station sends CSI-RS (channel state information-reference signal) signaling to the user equipment, to instruct the user equipment to measure and feed back channel quality.

In S1 120, the user equipment predicts the channel gains of the multiple future slots using the fourth prediction mode based on the channel gains of the multiple historical slots, and obtains the channel gain of each slot in the multiple future slots.

In S1130, the compression DNN in the user equipment processes the predicted multiple channel gains to obtain intermediate data output from intermediate nodes at the intermediate layer, where the amount of the intermediate data is less than the amount of the multiple channel gains input to the compression DNN.

In S1140, the intermediate data output by the intermediate node is quantified and transmitted.

In S1150, the decompression DNN in the base station processes the received intermediate data to restore the channel gains of the multiple future slots predicted by the user equipment. Based on these channel gains, the base station can determine the best transmission slot in the future.

In S1160, the base station selects to transmit downlink data to the user equipment in this best transmission slot in the future.

Returning to FIG. 8, in S830, the user equipment notifies the base station of a channel quality indicator for the slot with the highest channel gain indicated by the predicted information, so that the base station sends data in the slot based on the channel quality indicator.

The base station 110 may usually send to the user equipment 120 signaling for channel quality measurement periodically. For example, the base station 110 may send CSI-RS signaling to the user equipment 120 in each slot. In response to receipt of the CSI-RS signaling, the user equipment 120 may feed back a current CQI to the base station 110.

However, when the user equipment 120 determines that available uplink resources are lower than a second threshold (the threshold indicates that uplink resources are insufficient), in order to use the limited uplink resources more properly, the user equipment 120 may not feed back CQIs upon reception of each CSI-RS signal, but waits for the optimal slot indicated by the predicted information and then measures the channel in this slot, so as to feed back the real CQI of this optimal slot to the base station 110. Those skilled in the art can understand that when the base station determines, based on recorded resource usage statuses, information reported by the user equipment and so on, that the available uplink resources are lower than a specific threshold, the base station may send a message to the user equipment, so that the user equipment feeds back the CQI only in the optimal slot.

In addition, in a case that the user equipment 120 determines quality of an uplink feedback channel is lower than a third threshold (the threshold indicates that the quality of the uplink feedback channel is relatively poor), in order to avoid possible failures in feeding back the CQI through the uplink feedback channel with poor quality to waste transmission power and resources, the user equipment 120 can alternatively choose not to respond to all CSI-RS signalings, but waits for the optimal slot indicated by the predicted information and then feeds back a real CQI of the optimal slot to the base station 110 only at this slot. Those skilled in the art can understand that when the base station determines, according to previous data decoding operations and so on, that the quality of the uplink feedback channel is lower than a certain threshold, the base station may send a message to the user equipment, so that the user equipment feeds back a CQI only in the optimal slot.

The above two cases may exist in one embodiment or may exist in different embodiments. The above thresholds can be flexibly set according to actual needs, as long as the purpose of using resources properly and/or saving resources can be achieved.

In addition, in order to enable the base station to send downlink data in the optimal slot at more appropriate power, the user equipment may alternatively proactively feed back the real CQI of the optimal slot at this slot, regardless of whether the base station sends CSI-RS signaling to it or not. The base station that has received the real CQI of the optimal slot may perform power allocation properly based on the CQI as in the related art, thereby sending downlink data in the optimal slot at appropriate power.

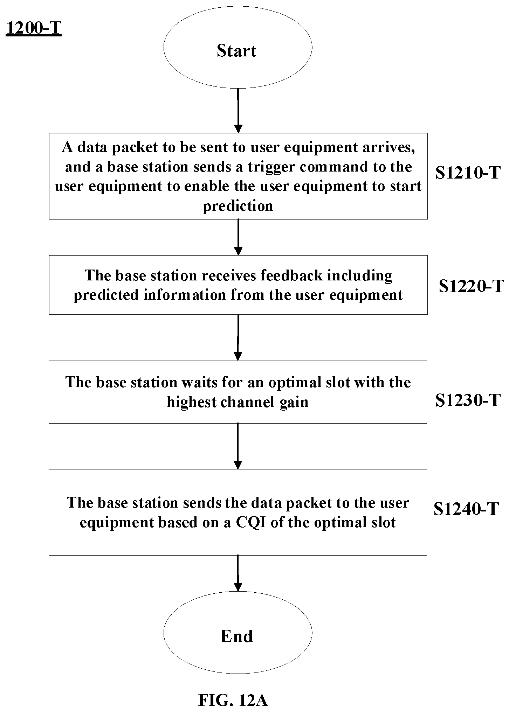

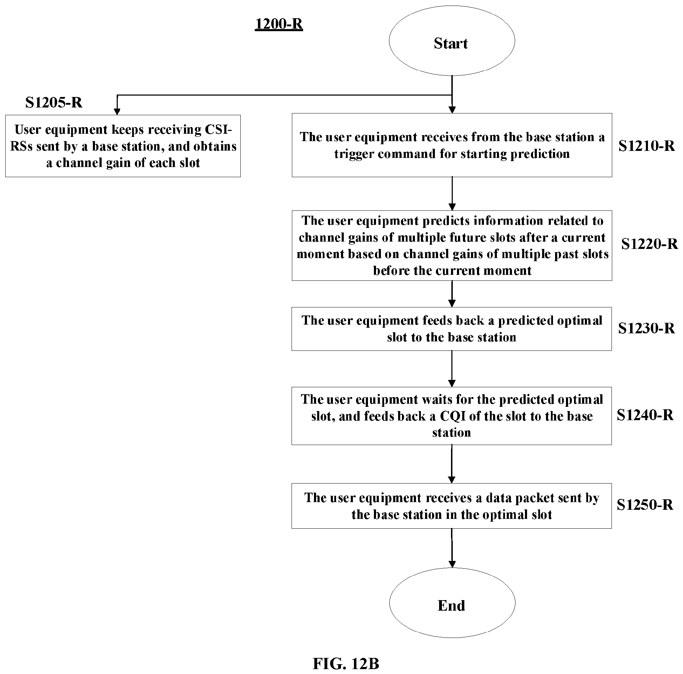

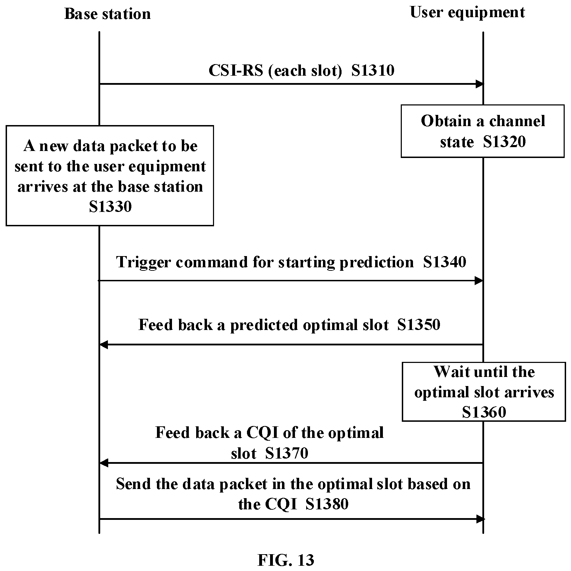

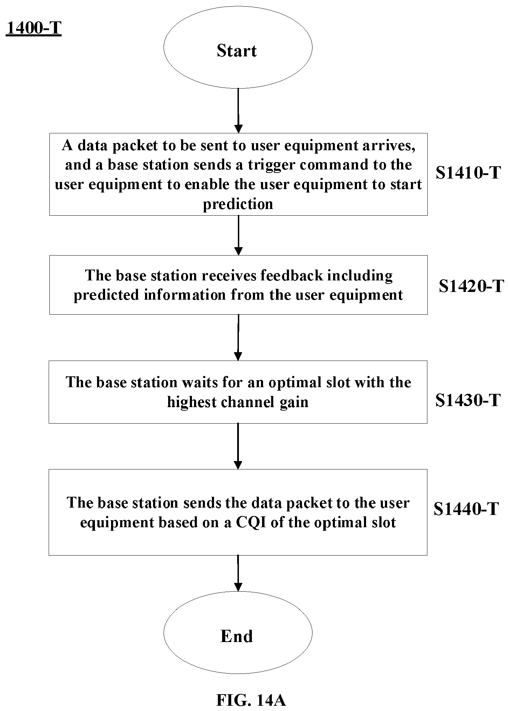

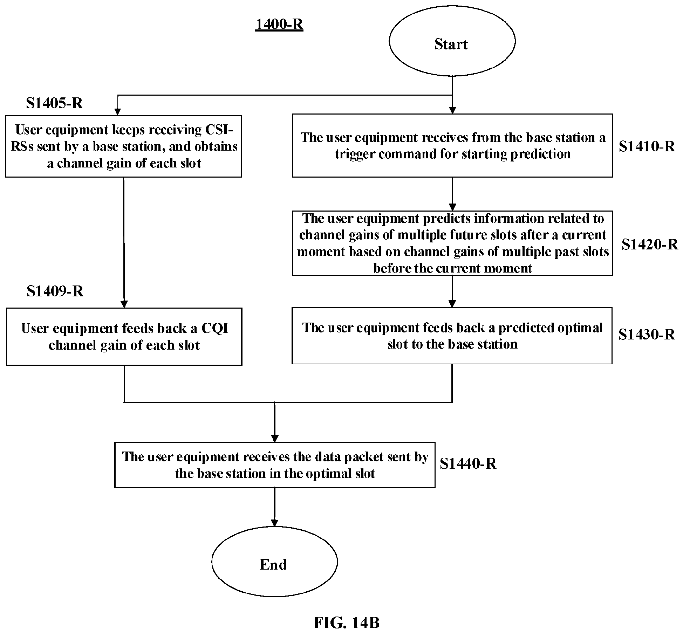

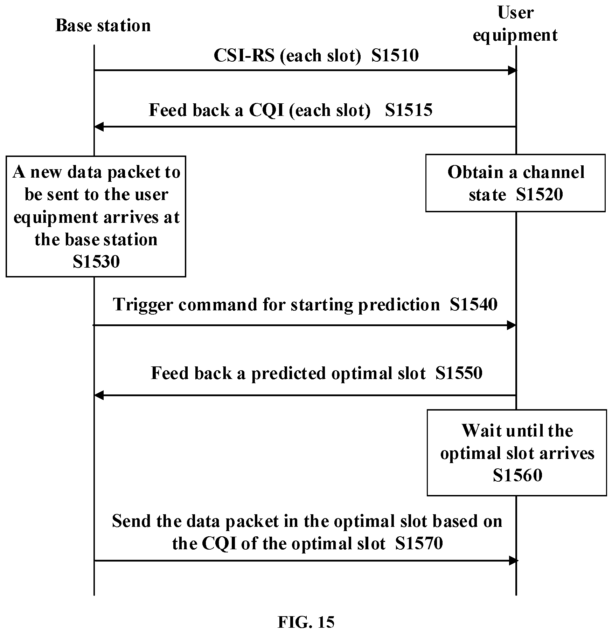

The user equipment can feed back the CQI to the base station in the following two manners. The first manner is shown in FIGs. 12A, 12B, and 13. In this manner, the user equipment responds only to the CSI-RS signaling of the optimal slot, and feeds back the CQI of the optimal slot to the base station in the optimal slot. The second manner is shown in FIGs. 14A, 14B, and 15. In this manner, once the user equipment receives CSI-RS signaling in a certain slot, the user equipment feeds back a CQI of the slot to the base station in the slot. The following describes FIGs. 12A to 15.

Corresponding to the first manner, FIG. 12A shows a flowchart of a data transmission method 1200-T performed by the base station, and FIG. 12B shows a flowchart of a data transmission method 1200-R performed by the user equipment.

As shown in FIG. 12A, the method 1200-T starts. In S1210-T, a data packet to be sent to the user equipment arrives, and the base station sends a trigger command to the user equipment to enable the user equipment to start prediction. In S1220-T, the base station receives feedback including predicted information from the user equipment, where the feedback indicates an optimal slot with the highest channel gain among multiple future slots. In S1230-T, the base station waits for the optimal slot with the highest channel gain. In S1240-T, the base station sends the data packet to the user equipment based on a CQI of the optimal slot. Then, the method 1200-T ends.

As shown in FIG. 12B, the method 1200-R starts. In S1205-R, the user equipment keeps receiving CSI-RSs sent by the base station, and obtains a channel gain of each slot. This step has no specific timing relationship with other steps, but keeps being executed. In S1210-R, the user equipment receives from the base station a trigger command for starting prediction. In S1220-R, the user equipment predicts information related to channel gains of multiple future slots after the current moment, based on channel gains of multiple past slots before the current moment, where the information indicates a slot with the highest channel gain. In this example, the first prediction mode is adopted, and the prediction result is an optimal slot with the highest channel gain. In S1230-R, the user equipment feeds back the predicted optimal slot to the base station. In S1240-R, the user equipment waits for the predicted optimal slot, and feeds back a CQI of this slot to the base station. In S1250-R, the user equipment receives a data packet sent by the base station in the optimal slot. Then, the method 1200-R ends.

FIG. 13 shows a timing diagram corresponding to the methods shown in FIGs. 12A and 12B.

In S1310, the base station sends CSI-RS signaling to the user equipment at each slot. Although this step is described only in S1310, this step keeps being executed periodically and has no specific timing relationship with other steps.

In S1320, the user equipment performs channel estimation based on the received data to obtain channel state information, such as channel gain of each slot. Although this step is described in S1320, this step also keeps being executed and has no specific timing relationship with other steps.

In S1330, a new data packet to be sent to the user equipment arrives at the base station.

In S1340, the base station sends to the user equipment a trigger command for starting prediction.

In S1350, the user equipment feeds back a predicted optimal slot to the base station.

In S1360, the user equipment waits until the optimal slot arrives.

In S1370, the user equipment measures a CQI of the optimal slot, and feeds back the CQI to the base station.

In S1380, the base station sends the data packet to the user equipment in the optimal slot based on the fed back CQI.

Corresponding to the second manner, FIG. 14A shows a flowchart of a data transmission method 1400-T performed by the base station, and FIG. 14B shows a flowchart of a data transmission method 1400-R performed by the user equipment.

The data transmission method 1400-T is substantially the same as the above data transmission method 1200-T, and the steps S1410-T to S1440-T are substantially the same as the steps S1210-T to S1240-T, and details will not be repeated herein.

As shown in FIG. 14B, the method 1400-R starts. In S1405-R, the user equipment keeps receiving CSI-RSs sent by the base station, and obtains a channel gain of each slot. In S1409-R, the user equipment keeps feeding back to the base station a CQI of each slot measured in response to the CSI-RS. Steps S1405-R and S1409-R have no specific timing relationship with other steps, but are executed all the time. Steps S1410-R to S1430-R are substantially the same as steps S1210-R to S1230-R. In S1440-R, the user equipment receives the data packet sent by the base station in the optimal slot. Then, the method 1400-R ends.

FIG. 15 shows a timing diagram corresponding to the methods shown in FIGs. 14A and 14B.

The S1510 is substantially the same as the S1310. In S1515, the user equipment feeds back the CQI to the base station in each slot. Although the operations of S1510 and S1515 are shown to be performed only once and are performed at the beginning of FIG. 15, S1510 and S1515 are executed in each slot all the time and have no specific timing relationship with other steps. S1520 to S1560 are substantially the same as S1320 to S1360. While the user equipment waits for the arrival of the optimal slot, the base station also waits for the arrival of the optimal slot to send data packets therein. In S1570, the base station sends the data packet to the user equipment in the optimal slot based on the CQI of the optimal slot.

According to the above technical solution shown in FIG. 8, the channel gains of the future slots are predicted based on the channel gains of the historical slots, so that the base station can determine the future slot with the highest channel gain. In this way, the downlink data can be sent in a slot with relatively better channel quality at a power matching the channel quality indicator of the slot, and more appropriate transmission resources can be flexibly determined based on the current channel state. This alleviates a problem of wasting power and resources due to data transmission in a slot with poor channel quality, thereby improving the transmission performance of downlink data.

The slot for sending downlink data by the base station can be predicted by using the above methods. In other scenarios, upcoming data traffic may be predicted based on arrival delays of past data packets and sizes of the data packets.

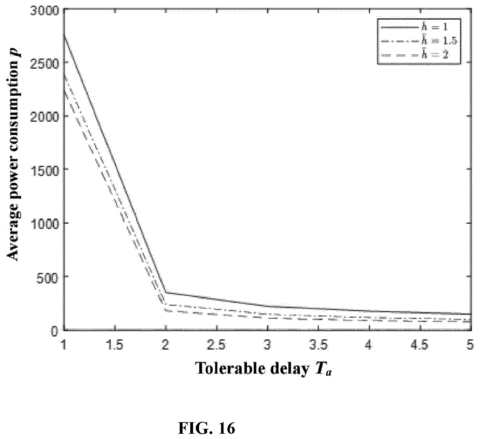

FIG. 16 shows a simulation result obtained by using the data transmission method according to an embodiment of the present disclosure. In the simulation process, it is assumed that the channel is a Rayleigh fading channel, the channel gains follow exponential distribution,

$$h \sim \exp\left(\frac{h}{\bar{h}}\right),$$

and the mean of the exponential distribution is $\bar{h}$. The power

$$p = \frac{4^l - 1}{h}$$

is obtained according to the Shannon's formula. The length of each data packet is $l$ = 4 bits. The base station selects the best channel in future Ta slots predicted by the user equipment to send data packets, where Ta is greater than a product of M and Th, M is the number of predicted future slots, and Th is a channel sampling period. Both the range of future time of the channel predicted by the user equipment and the slot selected for data transmission by the base station fall within allowable delay ranges of the data packet.

In the simulation diagram, Ta=1 means that no prediction is made, and the data packet is sent by the base station in a next slot immediately upon arrival. Ta=2 means predicting the optimal slot in the next two slots, Ta=3 means predicting the optimal slot in the next three slots, and so on. It can be seen from the simulation result that when data packets are sent immediately without any prediction, the average power consumed by the base station is the largest, and when prediction is made, the average power consumption of the base station decreases rapidly. As the number of predictable slots increases (the number of predictable slots cannot exceed the allowable maximum delay of the data packet), the average power consumption of the base station gradually decreases. The simulation result shows that when the base station performs scheduling and power allocation based on the prediction result of the user equipment, the power consumption can be greatly reduced.

Various exemplary electronic devices and methods according to embodiments of the present disclosure have been described above. It should be understood that the operations or functions of these electronic devices may be combined with each other to achieve more or fewer operations or functions than described. The operational steps of the methods can also be combined with each other in any suitable order, so that more or fewer operations than described are achieved similarly.

It should be understood that the machine-executable instructions in the machine-readable storage medium or program product according to the embodiments of the present disclosure can be configured to perform operations corresponding to the device and method embodiments described above. When referring to the above device and method embodiments, the embodiments of the machine-readable storage medium or the program product are clear to those skilled in the art, and therefore description thereof will not be repeated herein. A machine-readable storage medium and a program product for carrying or including the above-described machine-executable instructions also fall within the scope of the present disclosure. Such storage medium can include, but is not limited to, a floppy disk, an optical disc, a magneto-optical disc, a memory card, a memory stick, and the like.

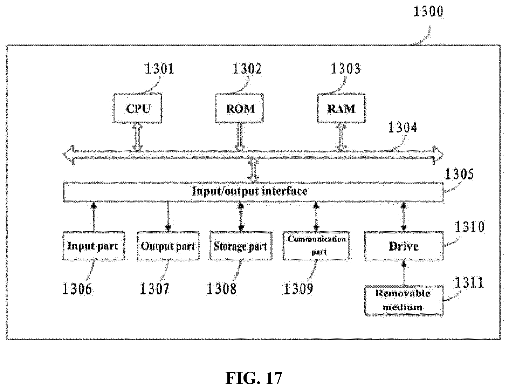

In addition, it should be understood that the above series of processing and devices may alternatively be implemented by software and/or firmware. In the case of implementation by software and/or firmware, a program constituting the software is installed from a storage medium or a network to a computer having a dedicated hardware configuration, such as a general-purpose personal computer 1300 shown in FIG. 17. When various programs are installed, the computer is capable of performing various functions and so on. FIG. 17 is a block diagram of an example structure of a personal computer as an information processing device that can be used in an embodiment of the present disclosure. In an example, the personal computer may correspond to the foregoing exemplary terminal device according to the present disclosure.

In FIG. 17, a central processing unit (CPU) 1301 executes various processing based on a program stored in a read-only memory (ROM) 1302 or a program loaded from a storage portion 1308 to a random access memory (RAM) 1303. The RAM 1303 also stores data required for executing various processing and the like by the CPU 1301 when necessary.

The CPU 1301, the ROM 1302, and the RAM 1303 are connected with each other via a bus 1304. An input/output interface 1305 is also connected to the bus 1304.

The following components are connected to the input/output interface 1305: an input part 1306, including a keyboard, a mouse, and the like; an output part 1307, including a display such as a cathode-ray tube (CRT) and a liquid crystal display (LCD), a speaker, and the like; a storage part 1308, including a hard disk and the like; and a communication part 1309, including a network interface card such as a LAN card or a modem. The communication part 1309 performs communication processing via a network such as the Internet.

Based on needs, a drive 1310 is also connected to the input/output interface 1305. A removable medium 1311 such as a magnetic disk, an optical disc, a magneto-optical disc, a semiconductor memory, or the like is mounted on the drive 1310 when necessary, so that a computer program read therefrom is installed in the storage part 1308 when necessary.

In a case that the foregoing series of processing are implemented by software, programs constituting the software are installed from a network such as the Internet or a storage medium such as the removable medium 1311.

Those skilled in the art should understand that such a storage medium is not limited to the removable medium 1311 shown in FIG. 17, in which the program is stored and distributed separately from a device to provide the program for users. For example, the removable medium 1311 includes a magnetic disk (including a floppy disk (registered trademark)), an optical disc (including a compact disk read-only memory (CD-ROM) and a digital versatile disk (DVD)), a magneto-optical disc (including a mini disk (MD)(registered trademark)), and a semiconductor memory. Alternatively, the storage medium may be the ROM 1302, a hard disk included in the storage part 1308, or the like, in which the program is stored, and may be distributed to users along with a device including the storage medium.

The technology of the present disclosure can be applied to various products. For example, the base stations mentioned in this disclosure can be implemented as any type of evolved Node B (gNB), such as a macro gNB and a small gNB. The small gNB can be a gNB covering a cell smaller than the macro cell, such as a pico gNB, a micro gNB, and a home (femto) gNB. Alternatively, the base station can be implemented as any other type of base station, such as a NodeB and a Base Transceiver Station (BTS). The base station can include: a body (also referred to as a base station device) configured to control radio communication; and one or more remote radio heads (RRHs) disposed at a different location from the body. In addition, various types of terminals which will be described below can each operate as a base station by performing base station functions temporarily or semi-persistently.

For example, the terminal device mentioned in the present disclosure, also referred to as user equipment in some examples, can be implemented as a mobile terminal (such as a smartphone, a tablet personal computer (PC), a notebook PC, a portable game terminal, a portable/dongle type mobile router and digital camera device) or in-vehicle terminal (such as car navigation device). The user equipment may also be implemented as a terminal that performs machine-to-machine (M2M) communication (also referred to as a machine type communication (MTC) terminal). Further, the user equipment may be a radio communication module (such as an integrated circuit module including a single wafer) installed on each of the above terminals.

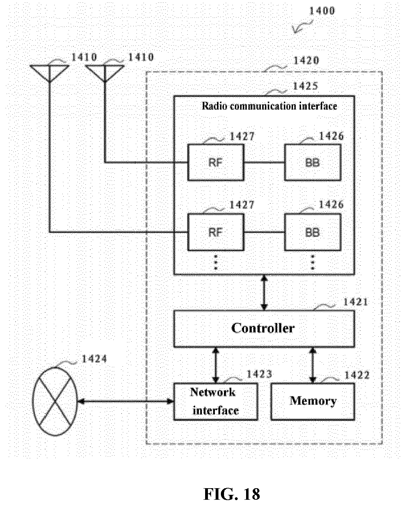

Use cases according to the present disclosure will be described below with reference to FIGs. 18 to 21.

[Use cases for the base station]

It should be understood that the term "base station" in the present disclosure has the full breadth of its normal meaning, and at least includes a wireless communication station that is used as part of a wireless communication system or a radio system to facilitate communication. Examples of the base station may be, for example, but not limited to, the following: a base station may be one or both of a base transceiver station (BTS) and a base station controller (BSC) in a GSM system, or may be one or both of a wireless network controller (RNC) and Node B in a WCDMA system, or may be an eNB in an LTE and LTE-Advanced system, or may be a corresponding network node in a future communication system (for example, a gNB, an eLTE eNB and the like that may be present in the 5G communication system). Part of functions of a base station in the present disclosure can also be implemented as an entity that has control functions to communication in the D2D, M2M, and V2V communication scenarios, or as an entity that plays a role of spectrum coordination in the cognitive radio communication scenario.

First use case

FIG. 18 is a block diagram illustrating a first example of a schematic configuration of a gNB to which the technology of the present disclosure is applicable. The gNB 1400 includes multiple antennas 1410 and a base station device 1420. The base station device 1420 and each antenna 1410 may be connected to each other via an RF cable. In one implementation, the gNB 1400 (or base station device 1420) herein may correspond to the electronic devices 300A, 1300A, and/or 1500B described above.

Each of the antennas 1410 includes a single or multiple antenna elements (such as multiple antenna elements included in a multi-input and multi-output (MIMO) antenna), and is used for the base station device 1420 to transmit and receive radio signals. As shown in FIG. 18, the gNB 1400 may include multiple antennas 1410. For example, the multiple antennas 1410 may be compatible with multiple frequency bands used by the gNB 1400.

The base station device 1420 includes a controller 1421, a memory 1422, a network interface 1423, and a radio communication interface 1425.

The controller 1421 may be, for example, a CPU or a DSP, and operates various functions of higher layers of the base station device 1420. For example, the controller 1421 generates data packets from data in signals processed by the radio communication interface 1425, and transfers the generated packets via the network interface 1423. The controller 1421 can bundle data from multiple baseband processors to generate the bundled packets, and transfer the generated bundled packets. The controller 1421 may have logic functions of performing control such as radio resource control, radio bearer control, mobility management, admission control, and scheduling. Such control may be performed in corporation with a gNB or a core network node in the vicinity. The memory 1422 includes a RAM and a ROM, and stores a program that is executed by the controller 1421 and various types of control data (such as a terminal list, transmission power data, and scheduling data).

The network interface 1423 is a communication interface for connecting the base station device 1420 to the core network 1424. The controller 1421 may communicate with a core network node or another gNB via the network interface 1423. In this case, the gNB 1400 and the core network node or other gNBs may be connected to each other through a logical interface (such as an S1 interface and an X2 interface). The network interface 1423 may also be a wired communication interface or a radio communication interface for radio backhaul lines. If the network interface 1423 is a radio communication interface, the network interface 1423 may use a higher frequency band for radio communication than a frequency band used by the radio communication interface 1425.

The radio communication interface 1425 supports any cellular communication schemes (such as Long Term Evolution (LTE) and LTE-Advanced), and provides, via the antenna 1410, radio connection to a terminal located in a cell of the gNB 1400. The radio communication interface 1425 may typically include, for example, a baseband (BB) processor 1426 and a RF circuit 1427. The BB processor 1426 may perform, for example, encoding/decoding, modulation/demodulation, and multiplexing/demultiplexing, and perform various types of signal processing of layers (such as L1, Medium Access Control (MAC), Radio Link Control (RLC), and Packet Data Convergence Protocol (PDCP)). Instead of the controller 1421, the BB processor 1426 may have a part or all of the above-described logic functions. The BB processor 1426 may be a memory that stores a communication control program, or a module that includes a processor configured to execute the program and a related circuit. Updating the program may allow the functions of the BB processor 1426 to be changed. The module may be a card or a blade that is inserted into a slot of the base station device 1420. Alternatively, the module may also be a chip that is mounted on the card or the blade. Meanwhile, the RF circuit 1427 may include, for example, a mixer, a filter, and an amplifier, and transmits and receives radio signals via the antenna 1410. Although FIG. 18 illustrates the example in which one RF circuit 1427 is connected to one antenna 1410, the present disclosure is not limited to thereto; rather, one RF circuit 1427 may connect to multiple antennas 1410 at the same time.

As illustrated in FIG. 18, the radio communication interface 1425 may include multiple BB processors 1426. For example, the multiple BB processors 1426 may be compatible with multiple frequency bands used by the gNB 1400. As illustrated in FIG. 18, the radio communication interface 1425 may include multiple RF circuits 1427. For example, the multiple RF circuits 1427 may be compatible with multiple antenna elements. Although FIG. 18 illustrates the example in which the radio communication interface 1425 includes the multiple BB processors 1426 and the multiple RF circuits 1427, the radio communication interface 1425 may also include a single BB processor 1426 or a single RF circuit 1427.

Second use case

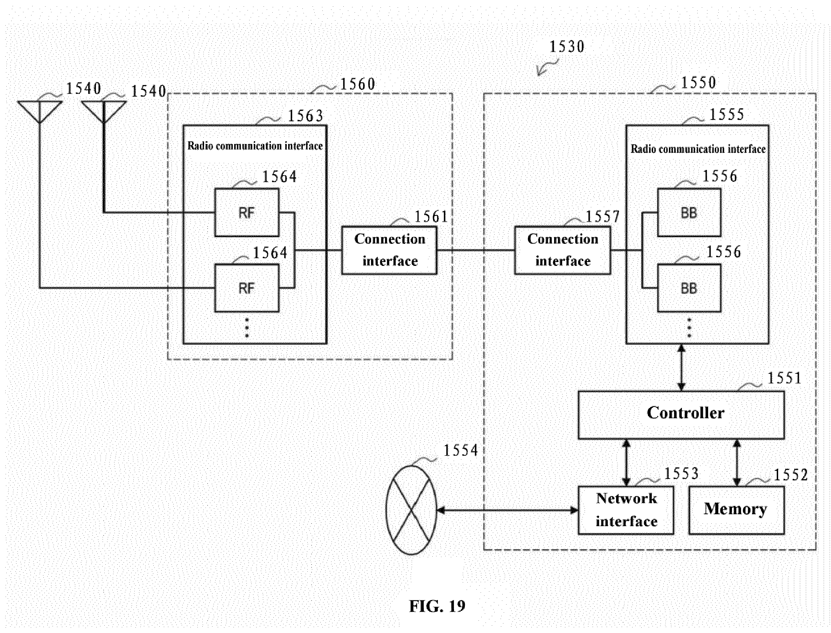

FIG. 19 is a block diagram illustrating a second example of a schematic configuration of a gNB to which the technology of the present disclosure is applicable. The gNB 1530 includes multiple antennas 1540, a base station device 1550, and an RRH 1560. The RRH 1560 and each antenna 1540 may be connected to each other via an RF cable. The base station device 1550 and the RRH 1560 may be connected to each other via a high speed line such as a fiber optic cable. In one implementation, the gNB 1530 (or base station device 1550) herein may correspond to the electronic devices 300A, 1300A, and/or 1500B described above.

Each of the antennas 1540 includes a single or multiple antenna elements such as multiple antenna elements included in a MIMO antenna, and is used for the RRH 1560 to transmit and receive radio signals. As shown in FIG. 19, the gNB 1530 may include multiple antennas 1540. For example, the multiple antennas 1540 may be compatible with multiple frequency bands used by the gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 18.

The radio communication interface 1555 supports any cellular communication scheme (such as LTE and LTE-Advanced) and provides radio communication to terminals positioned in a sector corresponding to the RRH 1560 via the RRH 1560 and the antenna 1540. The radio communication interface 1555 may typically include, for example, a BB processor 1556. The BB processor 1556 is the same as the BB processor 1426 described with reference to FIG. 18, except that the BB processor 1556 is connected to the RF circuit 1564 of the RRH 1560 via the connection interface 1557. As illustrated in FIG. 19, the radio communication interface 1555 may include multiple BB processors 1556. For example, the multiple BB processors 1556 may be compatible with multiple frequency bands used by the gNB 1530. Although FIG. 19 illustrates the example in which the radio communication interface 1555 includes multiple BB processors 1556, the radio communication interface 1555 may also include a single BB processor 1556.

The connection interface 1557 is an interface for connecting the base station device 1550 (radio communication interface 1555) to the RRH 1560. The connection interface 1557 may also be a communication module for communication in the above-described high speed line that connects the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 may also be a communication module for communication in the above-described high speed line.

The radio communication interface 1563 transmits and receives radio signals via the antenna 1540. The radio communication interface 1563 may typically include, for example, the RF circuit 1564. The RF circuit 1564 may include, for example, a mixer, a filter, and an amplifier, and transmit and receive radio signals via the antenna 1540. Although FIG. 19 illustrates the example in which one RF circuit 1564 is connected to one antenna 1540, the present disclosure is not limited to thereto; rather, one RF circuit 1564 may connect to multiple antennas 1540 at the same time.

As illustrated in FIG. 19, the radio communication interface 1563 may include multiple RF circuits 1564. For example, the multiple RF circuits 1564 may support multiple antenna elements. Although FIG. 19 illustrates the example in which the radio communication interface 1563 includes the multiple RF circuits 1564, the radio communication interface 1563 may also include a single RF circuit 1564.

[Use cases for the user equipment]

First use case

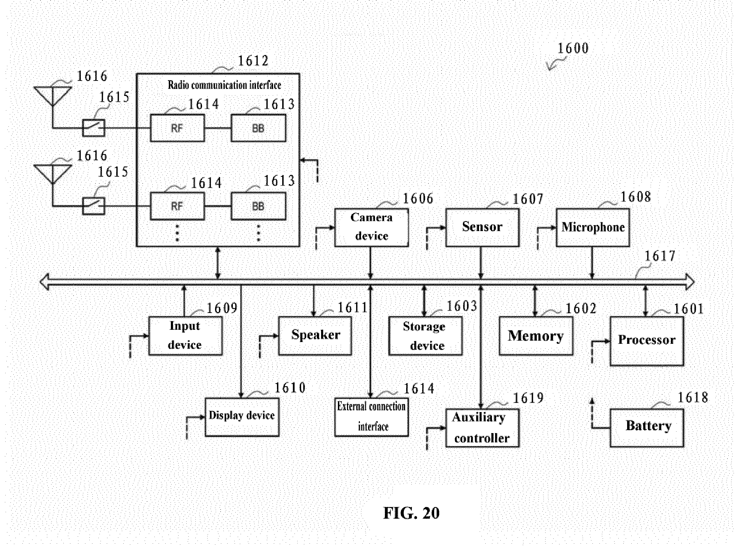

FIG. 20 is a block diagram illustrating an example of a schematic configuration of a smartphone 1600 to which the technology of the present disclosure can be applied. A smartphone 1600 includes a processor 1601, a memory 1602, a storage device 1603, an external connection interface 1604, a camera device 1606, a sensor 1607, a microphone 1608, an input device 1609, a display device 1610, a speaker 1611, a radio communication interface 1612, one or more antenna switches 1615, one or more antennas 1616, a bus 1617, a battery 1618, and an auxiliary controller 1619. In an implementation, the smartphone 1600 (or the processor 1601) herein may correspond to the above-described terminal device 300B and/or 1500A.

The processor 1601 may be, for example, a CPU or a system on a chip (SoC), and control functions of the application layer and other layers of the smartphone 1600. The memory 1602 includes a RAM and a ROM, and stores data and a program that is executed by the processor 1601. The storage device 1603 may include a storage medium such as a semiconductor memory and a hard disk. The external connection interface 1604 is an interface for connecting an external device (for example, a memory card and a universal serial bus (USB) device) to the smartphone 1600.

The camera device 1606 includes an image sensor (for example, a charge coupled device (CCD) and a complementary metal oxide semiconductor (CMOS)), and generates a captured image. The sensor 1607 may include a set of sensors, such as a measurement sensor, a gyro sensor, a geomagnetic sensor, and an acceleration sensor. The microphone 1608 converts the sound input of the smartphone 1600 into an audio signal. The input device 1609 includes, for example, a touch sensor configured to detect touches on the screen of the display device 1610, a keypad, a keyboard, buttons, or switches, and receives operations or information input from a user. The display device 1610 includes a screen (for example, a liquid crystal display (LCD) and an organic light emitting diode (OLED) display), and displays output images of the smartphone 1600. The speaker 1611 converts audio signals output from the smartphone 1600 into sound.

The radio communication interface 1612 supports any cellular communication scheme (such as LTE and LTE-Advanced) and performs radio communication. The radio communication interface 1612 may typically include, for example, a BB processor 1613 and an RF circuit 1614. The BB processor 1613 may perform, for example, encoding/decoding, modulation/demodulation, and multiplexing/demultiplexing, and perform various types of signal processing for radio communication. Meanwhile, the RF circuit 1614 may include, for example, a mixer, a filter, and an amplifier, and transmit and receive radio signals via the antenna 1616. The radio communication interface 1612 may be a chip module on which the BB processor 1613 and the RF circuit 1614 are integrated. As shown in FIG. 20, the radio communication interface 1612 may include multiple BB processors 1613 and multiple RF circuits 1614. Although FIG. 20 illustrates the example in which the radio communication interface 1612 includes the multiple BB processors 1613 and the multiple RF circuits 1614, the radio communication interface 1612 may also include a single BB processor 1613 or a single RF circuit 1614.

In addition, except from the cellular communication scheme, the radio communication interface 1612 can support other types of radio communication schemes, such as a short-range radio communication scheme, a near-field communication scheme, and a wireless local area network (LAN) scheme. In this case, the radio communication interface 1612 may include the BB processor 1613 and the RF circuit 1614 for each radio communication scheme.

Each of the antenna switches 1615 switches the connection destination of the antenna 1616 among multiple circuits (for example, circuits for different radio communication schemes) included in the radio communication interface 1612.

Each of the antennas 1616 includes one or more antenna elements (such as multiple antenna elements included in a MIMO antenna), and is used for the radio communication interface 1612 to transmit and receive radio signals. As shown in FIG. 20, the smartphone 1600 may include multiple antennas 1616. Although FIG. 20 illustrates the example in which the smartphone 1600 includes multiple antennas 1616, the radio communication interface 1600 may also include a single antenna 1616.

In addition, the smartphone 1600 may include the antennas 1616 for every radio communication scheme. In this case, the antenna switch 1615 can be removed from the configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the radio communication interface 1612, and the auxiliary controller 1619 with each other. The battery 1618 provides power for various blocks of the smartphone 1600 illustrated in FIG. 20 via feeders, and the feeders are partially expressed as dashed lines in the figure. The auxiliary controller 1619, for example, operates the minimum necessary functions of the smartphone 1600 in a sleep mode.

Second use case

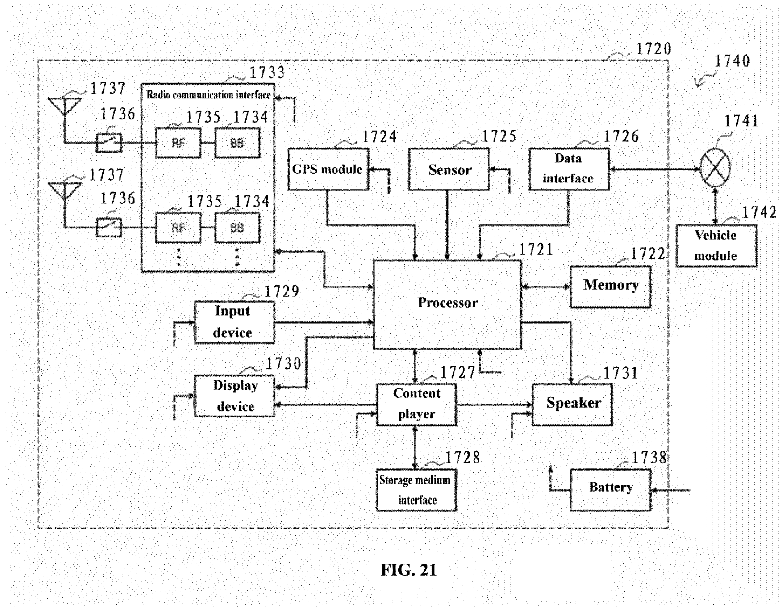

FIG. 21 is a block diagram illustrating an example of a schematic configuration of a car navigation device 1720 to which the technology of the present disclosure can be applied. A car navigation device 1720 includes a processor 1721, a memory 1722, a global positioning system (GPS) 1724, a sensor 1725, a data interface 1726, a content player 1727, a storage medium interface 1728, an input device 1729, a display device 1730, a speaker 1731, a radio communication interface 1733, one or more antenna switches 1736, one or more antennas 1737, and a battery 1738. In an implementation, the car navigation device 1720 (or the processor 1721) herein may correspond to the above-described terminal device 300B and/or 1500A.

The processor 1721 may be, for example, a CPU or a SoC, and control the navigation function and other functions of the car navigation device 1720. The memory 1722 includes a RAM and a ROM, and stores data and a program that is executed by the processor 1721.

The GPS module 1724 performs measurement on a location (such as a latitude, a longitude, and an altitude) of the car navigation device 1720 by using GPS signals received from GPS satellites. The sensor 1725 may include a set of sensors, such as a gyro sensor, a geomagnetic sensor, and an air pressure sensor. The data interface 1726 is connected to, for example, an in-vehicle network 1741 via a terminal not shown, and acquires data generated by the vehicle (such as vehicle speed data).

The content player 1727 plays back content stored in a storage medium (such as a CD and a DVD), which is inserted into the storage medium interface 1728. The input device 1729 includes, for example, a touch sensor configured to detect touches on the screen of the display device 1730, buttons, or switches, and receives operations or information input from a user. The display device 1730 includes a screen, for example, an LCD or OLED screen, and displays images for the navigation function or playback content. The speaker 1731 outputs the sound for the navigation function or playback content.

The radio communication interface 1733 supports any cellular communication scheme (such as LTE, LTE-Advanced, and NR) and performs radio communication. The radio communication interface 1733 may typically include, for example, a BB processor 1734 and an RF circuit 1735. The BB processor 1734 may perform, for example, encoding/decoding, modulation/demodulation, and multiplexing/demultiplexing, and perform various types of signal processing for radio communication. Meanwhile, the RF circuit 1735 may include, for example, a mixer, a filter, and an amplifier, and transmit and receive radio signals via the antenna 1737. The radio communication interface 1733 may alternatively be a chip module on which the BB processor 1734 and the RF circuit 1735 are integrated. As shown in FIG. 21, the radio communication interface 1733 may include multiple BB processors 1734 and multiple RF circuits 1735. Although FIG. 21 illustrates the example in which the radio communication interface 1733 includes the multiple BB processors 1734 and the multiple RF circuits 1735, the radio communication interface 1733 may also include a single BB processor 1734 or a single RF circuit 1735.

In addition, except from the cellular communication scheme, the radio communication interface 1733 can support other types of radio communication schemes, such as a short-range radio communication scheme, a near-field communication scheme, and a wireless LAN scheme. In this case, the radio communication interface 1733 may include the BB processor 1734 and the RF circuit 1735 for each radio communication scheme.

Each of the antenna switches 1736 switches the connection destination of the antenna 1737 among multiple circuits (for example, circuits for different radio communication schemes) included in the radio communication interface 1733.

Each of the antennas 1737 includes one or more antenna elements (such as multiple antenna elements included in a MIMO antenna), and is used for the radio communication interface 1733 to transmit and receive radio signals. As shown in FIG. 21, the car navigation device 1720 may include multiple antennas 1737. Although FIG. 21 illustrates an example in which the car navigation device 1720 includes multiple antennas 1737, the car navigation device 1720 may also include a single antenna 1737.

In addition, the car navigation device 1720 may include the antenna 1737 for every radio communication scheme. In this case, the antenna switch 1736 can be removed from the configuration of the car navigation device 1720.

The battery 1738 provides power for various blocks of the car navigation device 1720 illustrated in FIG. 21 via feeders, and the feeders are partially expressed as dashed lines in the figure. The battery 1738 accumulates power supplied by the vehicle.

The technology of the present disclosure may also be implemented as an in-vehicle system (or vehicle) 1740 including one or more blocks of the car navigation device 1720, the in-vehicle network 1741, and a vehicle module 1742. The vehicle module 1742 generates vehicle data (such as vehicle speed, engine speed, and failure information), and outputs the generated data to the in-vehicle network 1741.

The exemplary embodiments of the present disclosure have been described above with reference to the drawings, but the present disclosure is of course not limited to the above examples. Those skilled in the art can obtain various changes and modifications within the scope of the appended claims, and it should be understood that these changes and modifications will naturally fall within the technical scope of the present disclosure.

For example, multiple functions included in one unit in the above embodiments may be implemented by separate devices. Alternatively, multiple functions implemented by multiple units in the above embodiments may be implemented by separate devices, respectively. In addition, one of the above functions can be realized by multiple units. Needless to say, such a configuration is included in the technical scope of the present disclosure.

In this specification, the steps described in the flowchart include not only processes performed in time series in the described order, but also processes performed in parallel or individually rather than necessarily in time series. In addition, even for the steps processed in time series, needless to say, the order can be changed appropriately.

Although the present disclosure and its advantages have been described in detail, it should be understood that various modifications, replacements, and changes can be made without departing from the spirit and scope of the present disclosure as defined by the appended claims. Moreover, the terms "include", "comprise", or their any other variant in the embodiments of the present disclosure are intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

It will be appreciated from the descriptions herein that embodiments of the present disclosure may be configured as follows:

1. An electronic device on a user equipment side in a wireless communication system, comprising a processing circuit system, wherein the processing circuit system is configured to:

send, to a control entity, quantity information of training samples used by a user equipment during a current training of a local model;

receive uplink-resource information for uploading parameters of the local model, wherein an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model; and

upload the parameters of the local model to the control entity via the uplink resource indicated by the uplink-resource information, to cause the control entity to obtain a next global model.

2. The electronic device according to clause 1, wherein the processing circuit system is further configured to:

send, to the control entity, distance information indicating a distance between the user equipment and a base station,

wherein the uplink resource indicated by the uplink-resource information is allocated by the control entity based on the distance information and the quantity information coming from the multiple user equipments, so that a user equipment with a larger quantity indicated by the quantity information and with a smaller distance indicated by the distance information has a greater chance of being allocated with an uplink resource sufficient to upload the parameters of the local model.

3. The electronic device according to clause 1, wherein the uplink resource indicated by the uplink-resource information comprises an uplink resource for a URLLC service.

4. The electronic device according to clause 1, wherein the uplink resource indicated by the uplink-resource information comprises an uplink resource for a non-latency-sensitive service which is being performed between a base station and the multiple user equipments when the control entity receives the quantity information coming from the multiple user equipments.

5. The electronic device according to clause 4, wherein the non-latency-sensitive service is an eMBB service.

6. The electronic device according to clause 1, wherein the control entity and the multiple user equipments collectively implement federated learning, and the control entity is a base station.

7. The electronic device according to clause 1, wherein uploading of the parameters of the local model satisfies a prescribed QoS requirement, the QoS requirement being specified by a prescribed 5QI value.

8. The electronic device according to clause 1, wherein the processing circuit system is further configured to:

receive parameters of the next global model from the control entity to update the parameters of the local model,

wherein transmission of the parameters of the next global model satisfies a prescribed QoS requirement, the QoS requirement being specified by a prescribed 5QI value.

9. The electronic device according to clause 7 or 8, wherein the prescribed 5QI value defines at least one of the following:

a resource type being guaranteed bit rate GBR,

a default priority level being 70,

a packet delay budget being 10ms,

a packet error rate being 10-6, and

a default averaging window being 2000ms.

10. The electronic device according to clause 9, wherein the 5QI value is equal to 87.

11. An electronic device on a network device side in a wireless communication system, comprising a processing circuit system, wherein the processing circuit system is configured to:

receive, from a user equipment, quantity information of training samples used by the user equipment during a current training of a local model;

send uplink-resource information for uploading parameters of the local model, wherein an uplink resource indicated by the uplink-resource information is allocated by the processing circuit system based on quantity information coming from multiple user equipments, so that a user equipment with a larger quantity indicated by the quantity information has a greater chance of being allocated with an uplink resource sufficient to upload the parameters of the local model; and

receive the parameters of the local model that are uploaded by the user equipment via the uplink resource indicated by the uplink-resource information, so as to obtain a next global model.

12. The electronic device according to clause 11, wherein the processing circuit system is further configured to:

receive, from the user equipment, distance information indicating a distance between the user equipment and a base station,

wherein the uplink resource indicated by the uplink-resource information is allocated by the processing circuit system based on the distance information and the quantity information coming from the multiple user equipments, so that a user equipment with a larger quantity indicated by the quantity information and with a smaller distance indicated by the distance information has a greater chance of being allocated with an uplink resource sufficient to upload the parameters of the local model.

13. The electronic device according to clause 11, wherein the uplink resource indicated by the uplink-resource information comprises an uplink resource for a URLLC service.

14. The electronic device according to clause 11, wherein the uplink resource indicated by the uplink-resource information comprises an uplink resource for a non-latency-sensitive service which is being performed between a base station and the multiple user equipments when the processing circuit system receives the quantity information coming from the multiple user equipments.

15. The electronic device according to clause 14, wherein the non-latency-sensitive service is an eMBB service.

16. The electronic device according to clause 11, wherein the electronic device and the multiple user equipments collectively implement federated learning, and the electronic device is a base station.

17. The electronic device according to clause 11, wherein uploading of the parameters of the local model satisfies a prescribed QoS requirement, the QoS requirement being specified by a prescribed 5QI value.

18. The electronic device according to clause 11, wherein the processing circuit system is further configured to:

send parameters of the next global model to the user equipment, to cause the user equipment to update the parameters of the local model,

wherein transmission of the parameters of the next global model satisfies a prescribed QoS requirement, the QoS requirement being specified by a prescribed 5QI value.

19. The electronic device according to clause 17 or 18, wherein the prescribed 5QI value defines at least one of the following:

a resource type being guaranteed bit rate GBR,

a default priority level being 70,

a packet delay budget being 10ms,

a packet error rate being 10-6, and

a default averaging window being 2000ms.

20. The electronic device according to clause 19, wherein the 5QI value is equal to 87.

21. A method for use in a wireless communication system, comprising:

sending, to a control entity, quantity information of training samples used by a user equipment during a current training of a local model;

receiving uplink-resource information for uploading parameters of the local model, wherein an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model; and

uploading the parameters of the local model to the control entity via the uplink resource indicated by the uplink-resource information, to cause the control entity to obtain a next global model.

22. A method for use in a wireless communication system, comprising:

receiving, from a user equipment, quantity information of training samples used by the user equipment during a current training of a local model;

sending uplink-resource information for uploading parameters of the local model, wherein an uplink resource indicated by the uplink-resource information is allocated based on quantity information coming from multiple user equipments, so that a user equipment with a larger quantity indicated by the quantity information has a greater chance of being allocated with an uplink resource sufficient to upload the parameters of the local model; and

receiving the parameters of the local model that are uploaded by the user equipment via the uplink resource indicated by the uplink-resource information, so as to obtain a next global model.

23. A computer readable storage medium storing one or more instructions, wherein the one or more instructions, when being executed by one or more processors of an electronic device, cause the electronic device to perform the method according to clause 21 or 22.

24. An apparatus for use in a wireless communication system, comprising means for performing operations of the method according to clause 21 or 22.

25. An electronic device on a user equipment side in a wireless communication system, comprising a processing circuit system, wherein the processing circuit system is configured to:

based on channel gains of multiple historical slots before a current moment, predict information related to channel gains of multiple future slots after the current moment, wherein the information indicates a slot with a highest channel gain among the multiple future slots;

notify a base station of the information; and

notify the base station of a channel quality indicator for the slot with the highest channel gain indicated by the information, to cause the base station to send data based on the channel quality indicator in this slot.

26. The electronic device according to clause 25, wherein the processing circuit system is further configured to:

receive a trigger command for starting prediction sent by the base station, and

wherein the predicting information related to channel gains of multiple future slots after the current moment further comprises:
in response to reception of the trigger command, predicting the information related to the channel gains of the multiple future slots after the current moment.

27. The electronic device according to clause 26, wherein the receiving a trigger command for starting prediction sent by the base station comprises:
receiving the trigger command for starting prediction sent by the base station to a user equipment in response to occurrence of data to be sent to the user equipment.

28. The electronic device according to clause 25, wherein the information comprises at least one of the following:

a slot with the highest channel gain among the multiple future slots;

all slots whose channel gains exceed a first threshold among the multiple future slots;

a relative channel gain of each slot in the multiple future slots; and

a channel gain of each slot in the multiple future slots.

29. The electronic device according to clause 28, wherein when the information is the channel gain of each slot in the multiple future slots, the channel gain of each slot in the multiple future slots is sent to the base station through a compression model built by a deep neural network.

30. The electronic device according to clause 25, wherein the notifying the base station of a channel quality indicator for the slot with the highest channel gain indicated by the information comprises:
in a case that an available uplink resource being lower than a second threshold is determined, or in a case that an uplink feedback channel quality being lower than a third threshold is determined, notifying the base station of only the channel quality indicator for this slot, without notifying channel quality indicators for other slots among the multiple future slots.

31. An electronic device on a base station side in a wireless communication system, comprising a processing circuit system, wherein the processing circuit system is configured to:

receive, from a user equipment, information related to channel gains in multiple future slots after a current moment, wherein the information is obtained by the user equipment performing prediction based on channel gains of multiple historical slots before the current moment, and the information indicates a slot with the highest channel gain among the multiple future slots;

receive, from the user equipment, a channel quality indicator for the slot with the highest channel gain indicated by the information; and

send data based on the channel quality indicator in the slot with the highest channel gain indicated by the information.

32. The electronic device according to clause 31, wherein the processing circuit system is further configured to:
send, to the user equipment, a trigger command for starting prediction.

33. The electronic device according to clause 32, wherein the sending, to the user equipment, a trigger command for starting prediction comprises:
in response to occurrence of data to be sent to the user equipment, sending, to the user equipment, the trigger command for starting prediction.

34. The electronic device according to clause 31, wherein the information comprises at least one of the following:

a slot with the highest channel gain among the multiple future slots;

all slots whose channel gains exceed a first threshold among the multiple future slots;

a relative channel gain of each slot in the multiple future slots; and

a channel gain of each slot in the multiple future slots.

35. The electronic device according to clause 34, wherein when the information is the channel gain of each slot in the multiple future slots, the channel gain of each slot is received from the user equipment through a compression model built by a deep neural network.

36. The electronic device according to clause 31, wherein the receiving, from the user equipment, a channel quality indicator for the slot with the highest channel gain indicated by the information comprises:
in a case that an available uplink resource being lower than a second threshold is determined, or in a case that an uplink feedback channel quality being lower than a third threshold is determined, receiving only the channel quality indicator for this slot from the user equipment, without receiving channel quality indicators for other slots among the multiple future slots.

37. A method for use in a wireless communication system, comprising:

based on channel gains of multiple historical slots before a current moment, predicting information related to channel gains of multiple future slots after the current moment, wherein the information indicates a slot with a highest channel gain among the multiple future slots;

notifying a base station of the information; and

notifying the base station of a channel quality indicator for the slot with the highest channel gain indicated by the information, to cause the base station to send data based on the channel quality indicator in this slot.

38. A method for use in a wireless communication system, comprising:

receiving, from a user equipment, information related to channel gains in multiple future slots after a current moment, wherein the information is obtained by the user equipment performing prediction based on channel gains of multiple historical slots before the current moment, and the information indicates a slot with the highest channel gain among the multiple future slots;

receiving, from the user equipment, a channel quality indicator for the slot with the highest channel gain indicated by the information; and

sending data based on the channel quality indicator in the slot with the highest channel gain indicated by the information.

39. A computer readable storage medium storing one or more instructions, wherein the one or more instructions, when being executed by one or more processors of an electronic device, cause the electronic device to perform the method according to clause 37 or 38.

40. An apparatus for use in a wireless communication system, comprising means for performing operations of the method according to clause 37 or 38.

**Claims**

1.  An electronic device on a user equipment side in a wireless communication system, comprising a processing circuit system, wherein the processing circuit system is configured to:

send, to a control entity, quantity information of training samples used by a user equipment during a current training of a local model;

receive uplink-resource information for uploading parameters of the local model, wherein an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model; and

upload the parameters of the local model to the control entity via the uplink resource indicated by the uplink-resource information, to cause the control entity to obtain a next global model.

2. The electronic device according to claim 1, wherein the processing circuit system is further configured to:

send, to the control entity, distance information indicating a distance between the user equipment and a base station,

wherein the uplink resource indicated by the uplink-resource information is allocated by the control entity based on the distance information and the quantity information coming from the multiple user equipments, so that a user equipment with a larger quantity indicated by the quantity information and with a smaller distance indicated by the distance information has a greater chance of being allocated with an uplink resource sufficient to upload the parameters of the local model.

3. The electronic device according to claim 1, wherein the uplink resource indicated by the uplink-resource information comprises an uplink resource for a URLLC service.

4. The electronic device according to claim 1, wherein the uplink resource indicated by the uplink-resource information comprises an uplink resource for a non-latency-sensitive service which is being performed between a base station and the multiple user equipments when the control entity receives the quantity information coming from the multiple user equipments.

5. The electronic device according to claim 4, wherein the non-latency-sensitive service is an eMBB service.

6. The electronic device according to claim 1, wherein the control entity and the multiple user equipments collectively implement federated learning, and the control entity is a base station.

7. The electronic device according to claim 1, wherein uploading of the parameters of the local model satisfies a prescribed QoS requirement, the QoS requirement being specified by a prescribed 5QI value.

8. The electronic device according to claim 1, wherein the processing circuit system is further configured to:

receive parameters of the next global model from the control entity to update the parameters of the local model, wherein transmission of the parameters of the next global model satisfies a prescribed QoS requirement, the QoS requirement being specified by a prescribed 5QI value.

9. The electronic device according to claim 7 or 8, wherein the prescribed 5QI value defines at least one of the following:

a resource type being guaranteed bit rate GBR,
a default priority level being 70,
a packet delay budget being 10ms,
a packet error rate being $10^{-6}$, and
a default averaging window being 2000ms.

10. The electronic device according to claim 9, wherein the 5QI value is equal to 87.

11. An electronic device on a network device side in a wireless communication system, comprising a processing circuit system, wherein the processing circuit system is configured to:

receive, from a user equipment, quantity information of training samples used by the user equipment during a current training of a local model;
send uplink-resource information for uploading parameters of the local model, wherein an uplink resource indicated by the uplink-resource information is allocated by the processing circuit system based on quantity information coming from multiple user equipments, so that a user equipment with a larger quantity indicated by the quantity information has a greater chance of being allocated with an uplink resource sufficient to upload the parameters of the local model; and
receive the parameters of the local model that are uploaded by the user equipment via the uplink resource indicated by the uplink-resource information, so as to obtain a next global model.

12. The electronic device according to claim 11, wherein the processing circuit system is further configured to:

receive, from the user equipment, distance information indicating a distance between the user equipment and a base station,
wherein the uplink resource indicated by the uplink-resource information is allocated by the processing circuit system based on the distance information and the quantity information coming from the multiple user equipments, so that a user equipment with a larger quantity indicated by the quantity information and with a smaller distance indicated by the distance information has a greater chance of being allocated with an uplink resource sufficient to upload the parameters of the local model.

13. The electronic device according to claim 11, wherein the uplink resource indicated by the uplink-resource information comprises an uplink resource for a URLLC service.

14. The electronic device according to claim 11, wherein the uplink resource indicated by the uplink-resource information comprises an uplink resource for a non-latency-sensitive service which is being performed between a base station and the multiple user equipments when the processing circuit system receives the quantity information coming from the multiple user equipments.

15. The electronic device according to claim 14, wherein the non-latency-sensitive service is an eMBB service.

16. The electronic device according to claim 11, wherein the electronic device and the multiple user equipments collectively implement federated learning, and the electronic device is a base station.

17. The electronic device according to claim 11, wherein uploading of the parameters of the local model satisfies a prescribed QoS requirement, the QoS requirement being specified by a prescribed 5QI value.

18. The electronic device according to claim 11, wherein the processing circuit system is further configured to:

send parameters of the next global model to the user equipment, to cause the user equipment to update the parameters of the local model,
wherein transmission of the parameters of the next global model satisfies a prescribed QoS requirement, the QoS requirement being specified by a prescribed 5QI value.

19. The electronic device according to claim 17 or 18, wherein the prescribed 5QI value defines at least one of the following:

a resource type being guaranteed bit rate GBR,
a default priority level being 70,
a packet delay budget being 10ms,
a packet error rate being $10^{-6}$, and
a default averaging window being 2000ms.

20. The electronic device according to claim 19, wherein the 5QI value is equal to 87.

21. A method for use in a wireless communication system, comprising:

sending, to a control entity, quantity information of training samples used by a user equipment during a current training of a local model;
receiving uplink-resource information for uploading parameters of the local model, wherein an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model; and

uploading the parameters of the local model to the control entity via the uplink resource indicated by the uplink-resource information, to cause the control entity to obtain a next global model.

22. A method for use in a wireless communication system, comprising:

receiving, from a user equipment, quantity information of training samples used by the user equipment during a current training of a local model;

sending uplink-resource information for uploading parameters of the local model, wherein an uplink resource indicated by the uplink-resource information is allocated based on quantity information coming from multiple user equipments, so that a user equipment with a larger quantity indicated by the quantity information has a greater chance of being allocated with an uplink resource sufficient to upload the parameters of the local model; and

receiving the parameters of the local model that are uploaded by the user equipment via the uplink resource indicated by the uplink-resource information, so as to obtain a next global model.

23. A computer readable storage medium storing one or more instructions, wherein the one or more instructions, when being executed by one or more processors of an electronic device, cause the electronic device to perform the method according to claim 21 or 22.

24. An apparatus for use in a wireless communication system, comprising means for performing operations of the method according to claim 21 or 22.

25. An electronic device on a user equipment side in a wireless communication system, comprising a processing circuit system, wherein the processing circuit system is configured to:

based on channel gains of multiple historical slots before a current moment, predict information related to channel gains of multiple future slots after the current moment, wherein the information indicates a slot with a highest channel gain among the multiple future slots;

notify a base station of the information; and

notify the base station of a channel quality indicator for the slot with the highest channel gain indicated by the information, to cause the base station to send data based on the channel quality indicator in this slot.

26. The electronic device according to claim 25, wherein the processing circuit system is further configured to:

receive a trigger command for starting prediction sent by the base station, and

wherein the predicting information related to channel gains of multiple future slots after the current moment further comprises:

in response to reception of the trigger command, predicting the information related to the channel gains of the multiple future slots after the current moment.

27. The electronic device according to claim 26, wherein the receiving a trigger command for starting prediction sent by the base station comprises:

receiving the trigger command for starting prediction sent by the base station to a user equipment in response to occurrence of data to be sent to the user equipment.

28. The electronic device according to claim 25, wherein the information comprises at least one of the following:

a slot with the highest channel gain among the multiple future slots;

all slots whose channel gains exceed a first threshold among the multiple future slots;

a relative channel gain of each slot in the multiple future slots; and

a channel gain of each slot in the multiple future slots.

29. The electronic device according to claim 28, wherein when the information is the channel gain of each slot in the multiple future slots, the channel gain of each slot in the multiple future slots is sent to the base station through a compression model built by a deep neural network.

30. The electronic device according to claim 25, wherein the notifying the base station of a channel quality indicator for the slot with the highest channel gain indicated by the information comprises:
in a case that an available uplink resource being lower than a second threshold is determined, or in a case that an uplink feedback channel quality being lower than a third threshold is determined, notifying the base station of only the channel quality indicator for this slot, without notifying channel quality indicators for other slots among the multiple future slots.

31. An electronic device on a base station side in a wireless communication system, comprising a processing circuit system, wherein the processing circuit system is configured to:

receive, from a user equipment, information related to channel gains in multiple future slots after a current moment, wherein the information is obtained by the user equipment performing prediction based on channel gains of multiple historical slots before the current moment, and the information indicates a slot with the highest channel gain among the multiple future slots;
receive, from the user equipment, a channel quality indicator for the slot with the highest channel gain indicated by the information; and
send data based on the channel quality indicator in the slot with the highest channel gain indicated by the information.

32. The electronic device according to claim 31, wherein the processing circuit system is further configured to:
send, to the user equipment, a trigger command for starting prediction.

33. The electronic device according to claim 32, wherein the sending, to the user equipment, a trigger command for starting prediction comprises:
in response to occurrence of data to be sent to the user equipment, sending, to the user equipment, the trigger command for starting prediction.

34. The electronic device according to claim 31, wherein the information comprises at least one of the following:

a slot with the highest channel gain among the multiple future slots;
all slots whose channel gains exceed a first threshold among the multiple future slots;
a relative channel gain of each slot in the multiple future slots; and
a channel gain of each slot in the multiple future slots.

35. The electronic device according to claim 34, wherein when the information is the channel gain of each slot in the multiple future slots, the channel gain of each slot is received from the user equipment through a compression model built by a deep neural network.

36. The electronic device according to claim 31, wherein the receiving, from the user equipment, a channel quality indicator for the slot with the highest channel gain indicated by the information comprises:
in a case that an available uplink resource being lower than a second threshold is determined, or in a case that an uplink feedback channel quality being lower than a third threshold is determined, receiving only the channel quality indicator for this slot from the user equipment, without receiving channel quality indicators for other slots among the multiple future slots.

37. A method for use in a wireless communication system, comprising:

based on channel gains of multiple historical slots before a current moment, predicting information related to channel gains of multiple future slots after the current moment, wherein the information indicates a slot with a highest channel gain among the multiple future slots;
notifying a base station of the information; and
notifying the base station of a channel quality indicator for the slot with the highest channel gain indicated by the information, to cause the base station to send data based on the channel quality indicator in this slot.

38. A method for use in a wireless communication system, comprising:

receiving, from a user equipment, information related to channel gains in multiple future slots after a current moment, wherein the information is obtained by the user equipment performing prediction based on channel gains of multiple historical slots before the current moment, and the information indicates a slot with the highest channel gain among the multiple future slots;

receiving, from the user equipment, a channel quality indicator for the slot with the highest channel gain indicated by the information; and

sending data based on the channel quality indicator in the slot with the highest channel gain indicated by the information.

39. A computer readable storage medium storing one or more instructions, wherein the one or more instructions, when being executed by one or more processors of an electronic device, cause the electronic device to perform the method according to claim 37 or 38.

40. An apparatus for use in a wireless communication system, comprising means for performing operations of the method according to claim 37 or 38.

100

Global model

Base station 110

Local model uploading (URLLC)

Large file transmission (eMBB)

Local model downloading

FL group

User equipment 120-1   User equipment 120-2   User equipment 120-3

Local model

Data sampling for training: $\{x_1^1, x_2^1, ..., x_{K_1}^1\}$  $\{x_1^2, x_2^2, ..., x_{K_2}^2\}$  $\{x_1^3, x_2^3, ..., x_{K_3}^3\}$

**FIG. 1**

FL application server

Federated learning control function FLCF

V2

V2

V2

V3

Base station

LTE-Uu

UE C

FL application

V1

LTE-Uu

LTE-Uu

UE A

FL application

V1

V4

UE B

FL application

V1

V4

FL application

**FIG. 2**

300

| A user equipment sends, to a control entity, quantity information of training samples used by the user equipment during a current training of a local model | S310 |

| The user equipment receives uplink-resource information for uploading parameters of the local model, wherein an uplink resource indicated by the uplink-resource information is allocated by the control entity based on quantity information coming from multiple user equipments, so that a user equipment with a larger quantity indicated by the quantity information has a greater chance of being allocated with an uplink resource sufficient to upload the parameters of the local model | S320 |

| The user equipment uploads the parameters of the local model to the control entity via the uplink resource indicated by the uplink-resource information, to cause the control entity to obtain a next global model | S330 |

**FIG. 3**

FIG. 4

500

User equipment i
in a group

Base station
505

$n^{th}$ iteration
(start)

Send $Ki(n)$ and $di(n)$  S510

Determine a resource
allocation result $Xi(n)$
based on $Ki(n)$ and
$di(n)$  S520

Send the resource allocation result
$Xi(n)$  S530

$T_0$

Upload local-model parameters $Wi(n)$
S540

Download global-model parameters g$i(n)$
S550

$n^{th}$ iteration
(end)

Send $Ki(n+1)$ and $di(n+1)$
S560

$(n+1)^{th}$ iteration
(start)

...

FIG. 5

| 5QI value | Resource type | Default priority level | Packet delay budget | Packet error rate | Default maximum data burst | Default averaging window | Example service |
|---|---|---|---|---|---|---|---|
| 87 | GBR | 70 | 10ms | $10^{-6}$ | N/A | 2000ms | Federated learning parameter transmission |

FIG. 6

700

FIG. 7

800

Based on channel gains of multiple historical slots before a current moment, a user equipment predicts information related to channel gains of multiple future slots after the current moment, wherein the information indicates a slot with a highest channel gain among the multiple future slots | S810

The user equipment notifies a base station of the information | S820

The user equipment notifies the base station of a channel quality indicator for the slot with the highest channel gain indicated by the information, to cause the base station to send data based on the channel quality indicator in this slot | S830

FIG. 8

**FIG. 9**

$x[t]$     $y[t]$

Channel estimation

Base station 110      User equipment 120

Channel gain $h[t]$

$-5$    $-2$    $0$    $3$    $t$

$y[0] = [0, \quad 1, \quad 0]$

Input      Output

Historical channel state $x[t]$

$y[t]$     Output vector indicates future channel states

**FIG. 10**

User equipment 120

Prediction DNN 1110    Predicted channel gain    Compression DNN 1120

Base station 110

Decompression DNN 1130    Restored channel gain

**FIG. 11A**

1100

Base station                                                    User equipment

CSI-RS  S1110

Predict channel
gains of multiple
future slots  S1120

Compression
processing using
compression DNN
S1130

Quantization and feedback on intermediate data
output by an intermediate node  S1140

Restore predicted
channel gains using
decompression DNN
S1150

Send downlink data in an
optimal slot  S1160

FIG. 11B

1200-T

Start

A data packet to be sent to user equipment arrives, and a base station sends a trigger command to the user equipment to enable the user equipment to start prediction

S1210-T

The base station receives feedback including predicted information from the user equipment

S1220-T

The base station waits for an optimal slot with the highest channel gain

S1230-T

The base station sends the data packet to the user equipment based on a CQI of the optimal slot

S1240-T

End

FIG. 12A

1200-R

Start

S1205-R

User equipment keeps receiving CSI-RSs sent by a base station, and obtains a channel gain of each slot

The user equipment receives from the base station a trigger command for starting prediction | S1210-R

The user equipment predicts information related to channel gains of multiple future slots after a current moment based on channel gains of multiple past slots before the current moment | S1220-R

The user equipment feeds back a predicted optimal slot to the base station | S1230-R

The user equipment waits for the predicted optimal slot, and feeds back a CQI of the slot to the base station | S1240-R

The user equipment receives a data packet sent by the base station in the optimal slot | S1250-R

End

FIG. 12B

45

Base station                                    User equipment

CSI-RS (each slot)  S1310

Obtain a channel
state  S1320

A new data packet to be
sent to the user equipment
arrives at the base station
S1330

Trigger command for starting prediction  S1340

Feed back a predicted optimal slot  S1350

Wait until the
optimal slot arrives
S1360

Feed back a CQI of the optimal
slot  S1370

Send the data packet in the optimal slot based on
the CQI  S1380

FIG. 13

**1400-T**

Start

A data packet to be sent to user equipment arrives, and a base station sends a trigger command to the user equipment to enable the user equipment to start prediction — S1410-T

The base station receives feedback including predicted information from the user equipment — S1420-T

The base station waits for an optimal slot with the highest channel gain — S1430-T

The base station sends the data packet to the user equipment based on a CQI of the optimal slot — S1440-T

End

**FIG. 14A**

**1400-R**

```
                                    ┌─────────────┐
                                    │    Start    │
                                    └─────────────┘
```

S1405-R

| User equipment keeps receiving CSI-RSs sent by a base station, and obtains a channel gain of each slot |

| The user equipment receives from the base station a trigger command for starting prediction | S1410-R

| The user equipment predicts information related to channel gains of multiple future slots after a current moment based on channel gains of multiple past slots before the current moment | S1420-R

S1409-R

| User equipment feeds back a CQI channel gain of each slot |

| The user equipment feeds back a predicted optimal slot to the base station | S1430-R

| The user equipment receives the data packet sent by the base station in the optimal slot | S1440-R

```
                                    ┌─────────────┐
                                    │     End     │
                                    └─────────────┘
```

**FIG. 14B**

Base station

User equipment

CSI-RS (each slot) S1510

Feed back a CQI (each slot) S1515

A new data packet to be sent to the user equipment arrives at the base station S1530

Obtain a channel state S1520

Trigger command for starting prediction S1540

Feed back a predicted optimal slot S1550

Wait until the optimal slot arrives S1560

Send the data packet in the optimal slot based on the CQI of the optimal slot S1570

FIG. 15

FIG. 16

1300

1301    1302    1303

| CPU | ROM | RAM |

1304

Input/output interface    1305

| Input part | Output part | Storage part | Communication part | Drive | 1310 |

1306    1307    1308    1309

Removable medium    1311

**FIG. 17**

**FIG. 18**

**FIG. 19**

FIG. 20

**FIG. 21**

EP 4 369 767 A1

## INTERNATIONAL SEARCH REPORT

| International application No. |
| --- |
| **PCT/CN2022/102285** |

**A.    CLASSIFICATION OF SUBJECT MATTER**

H04W 24/06(2009.01)i;  H04W 72/04(2009.01)i;  G06N 3/04(2006.01)i

According to International Patent Classification (IPC) or to both national classification and IPC

**B.    FIELDS SEARCHED**

Minimum documentation searched (classification system followed by classification symbols)

H04W,G06N

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 资源, 配置, 用户, 终端, 基站, 样本, 模型, 全局, 训练, 数量, 上行, 距离, 业务, 非时延, 非实时, 质量, 误码率, 比特率, 信道, 增益, 时隙, 预测, 估计, 通知, resource, uplink, UE, node, edge, global, resource, allocation, training, modle, number, distance, URLLC, eMBB, non-real-time, service, quality, QoS, time, slot, frame, prediction, threshold, maximum, channel, gain

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111158902 A (GUANGDONG UNIVERSITY OF TECHNOLOGY) 15 May 2020 (2020-05-15) <br> description, paragraphs [0015]-[0123] | 1-24 |
| X | CN 108738151 A (BEIHANG UNIVERSITY) 02 November 2018 (2018-11-02) <br> description, paragraphs [0044]-[0087] | 25-29, 31-35, 37-40 |
| A | CN 112738851 A (BEIJING UNIVERSITY OF POSTS AND TELECOMMUNICATIONS) 30 April 2021 (2021-04-30) <br> entire document | 1-40 |
| A | WO 2020006687 A1 (NOKIA SHANGHAI BELL CO., LTD. et al.) 09 January 2020 (2020-01-09) <br> entire document | 1-40 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 September 2022** | **26 September 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/102285**

| Patent document cited in search report | | | Publication date (day/month/year) | Patent family member(s) | Publication date (day/month/year) |
|---|---|---|---|---|---|
| CN | 111158902 | A | 15 May 2020 | None | |
| CN | 108738151 | A | 02 November 2018 | None | |
| CN | 112738851 | A | 30 April 2021 | None | |
| WO | 2020006687 | A1 | 09 January 2020 | None | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110756858

**Non-patent literature cited in the description**

- **M. CHEN ; Z. YANG ; W. SAAD ; C. YIN ; H. V POOR ; S. CUIO.** A Joint Learning and Communications Framework for Federated Learning Over Wireless networks. *IEEE Transactions on Wireless Communications*, January 2021, vol. 20, 269-283